# EUROPÄISCHE PATENTANMELDUNG

(11) **EP 4 786 568 A2**
(43) Veröffentlichungstag der Anmeldung: **05.08.2026**
(21) Anmeldenummer: 26186720.4
(22) Anmeldetag: 15.08.2023
(51) Int. Cl.: C11D 17/04

(54) **REINIGUNGSMITTELPORTION UMFASSEND GELPHASE(N), PULVER UND FORMKÖRPER**

(30) Priorität: 22.08.2022 DE 102022208665
(62) Teilanmeldung aus: 23757590.7
(71) Anmelder: Henkel AG & Co. KGaA, 40589 Düsseldorf (DE)
(72) Erfinder: Kurth, Oliver, 40764 Langenfeld (DE); Kreis, Michael, 51377 Leverkusen (DE); von den Driesch, Karl-Josef, 40789 Monheim (DE); Gebert-Schwarzwaelder, Antje, 41469 Neuss (DE); Cappleman, Robert Stephen, 47119 Duisburg (DE)

(57) **Zusammenfassung**

Die vorliegende Erfindung betrifft eine Reinigungsmitteleinmalportion, bevorzugt für das maschinelle Geschirrspülen, welche in einer wasserlöslichen Verpackung aus Aufnahmekammer und Verschlusselement mindestens eine Gelphase, mindestens ein Pulver und mindestens einen Formkörper enthält, der so angeordnet ist, dass der Formkörper sich nicht direkt im Kontakt mit der mindestens einen Gelphase befindet.

## Beschreibung

Die vorliegende Erfindung betrifft eine Reinigungsmitteleinmalportion, bevorzugt für das maschinelle Geschirrspülen, welche in einer wasserlöslichen Verpackung aus Aufnahmekammer und Verschlusselement mindestens eine Gelphase, mindestens ein Pulver und mindestens einen Formkörper enthält, der so angeordnet ist, dass der Formkörper sich nicht direkt im Kontakt mit der mindestens einen Gelphase befindet.

Reinigungsmittel liegen üblicherweise in fester Form oder in flüssiger Form (oder auch als fließendes Gel) vor. Insbesondere flüssige Reinigungsmittel erfreuen sich dabei zunehmender Beliebtheit beim Verbraucher.

Feste Reinigungsmittel haben dabei den Vorteil, dass sie, im Gegensatz zu flüssigen Reinigungsmitteln, keine Konservierungsstoffe benötigen. Flüssige Angebotsformen setzen sich zunehmend am Markt durch, insbesondere auf Grund ihrer schnellen Löslichkeit und damit verbundenen schnellen Verfügbarkeit der enthaltenen aktiven Inhaltsstoffe. Dies bietet dem Verbraucher die Möglichkeit, zeitverkürzte Spülprogramme zu verwenden und dennoch eine gute Reinigungsleistung zu erhalten.

Ferner haben sich die Verbraucher an ein bequemes Dosieren von vorportionierten maschinellen Reinigungsmitteln, wie Geschirrspülmitteln, gewöhnt und nutzen diese Produkte in Form von Tabletten (feste Reinigungsmittel) oder in Form von Beuteln, die mit einem üblicherweise mit einem flüssigen Reinigungsmittel befüllt sind. Einmalportionen in wasserlöslichen Beuteln erfreuen sich beim Verbraucher nicht nur deshalb zunehmender Beliebtheit, weil der Verbraucher mit der chemischen Zusammensetzung nicht mehr in Berührung kommt, sondern nicht zuletzt auch wegen der attraktiven Optik der Beutel. Die Optik der Dosierungsform nimmt zunehmend an Bedeutung. Neben einer guten Reinigungsleistung und einer ausreichenden Lagerstabilität ist eine gute Optik einer der Entscheidungsgründe für die Wahl eines Produktes.

Aus Sicht des Verbrauchers ist es nun wünschenswert, die Vorteile beider Angebotsformen zu kombinieren und eine gegenüber dem Stand der Technik verbesserte Darreichungsform insbesondere für üblicherweise flüssige Reinigungsmittel bereitzustellen. Dabei soll sowohl eine Einmalportionierung möglich sein und gleichzeitig ein für den Verbraucher optisch ansprechendes Aussehen erreicht werden.

Wichtig ist dabei für den Verbraucher auch, dass die Einmalportion optisch strukturierte Bereiche aufweist, die sich nicht vermischen und die sauber optisch getrennt voneinander vorliegen. Neben dem ansprechenden Aussehen ist es wichtig, dass die Einmalportionen einfach herzustellen sind, bei Lagerung stabil bleiben und keine Leckagen aufweisen. Bei Einmalportionen, welche lose Partikel (wie Pulver) aufweisen, ist zu beobachten, dass bei der Fertigung unbeabsichtigt einzelne Pulverbestandteile zwischen/auf die Bereiche gelangen, die für den Verschluss der Einmalportionen notwendig sind. Dies hat viele Nachteile. Zum einen wird der optische Eindruck solcher Reinigungsportionen vom Konsumenten als unsauber, unstrukturiert und fehlerhaft wahrgenommen. Zum anderen ergeben sich durch solche unsauberen Verschlussbereiche nicht fest verschlossene Einmalportionen, die undicht sind/Leckagen aufweisen. Solche undichten Verpackungen können zum Austritt des Reinigungsmittels aus der Einmalportion führen. Dies ist zu vermeiden, damit weder der Konsument noch die weiteren Einmalportionen, welche in der gleichen Verpackung lagern, mit dem Reinigungsmittel in Kontakt kommen sollen. Außerdem ermöglichen undichte Verpackungen einen vergleichsweise hohen Feuchtigkeits- und/oder Luftzutritt zu den Inhaltsstoffen in der Verpackung, der ihre Wirkungsfähigkeit reduzieren und/oder zu ihrer Verklebung führen kann, und damit zu einer Reduktion der Reinigungsleistung führen kann.

Die Aufgabe der vorliegenden Erfindung ist es daher, eine Darreichungsform für ein Reinigungsmittel bereitzustellen, welches einfach handhabbar, stabil (insbesondere lager- und transportstabil) ist, dabei eine gute Reinigungsleistung aufweist, sowie möglichst nachhaltig ist und dabei geringere Mengen an Verpackungsmaterial benötigt.

Ein erster Gegenstand der vorliegenden Erfindung ist daher eine Reinigungsmitteleinmalportion, umfassend
a) eine wasserlösliche Verpackung, umfassend
a1) mindestens eine wasserlösliche Aufnahmekammer
a2) ein diese wasserlösliche Aufnahmekammer verschließendes wasserlösliches Verschlusselement
b) eine phosphatfreie Reinigungsmittelzusammensetzung, umfassend
b1) mindestens eine Gelphase
b2) mindestens ein Pulver,
b3) mindestens einen, von Pulver und Gelphase verschiedenen, Formkörper,
wobei der Formkörper in der Kammer so angeordnet ist, dass er sich nicht in direktem Kontakt mit der mindestens einen Gelphase befindet.

Die erfindungsgemäßen Reinigungsmitteleinmalportionen werden insbesondere zur Reinigung von harten Oberflächen, insbesondere Geschirr und anderem Spülgut eingesetzt. Die erfindungsgemäßen Reinigungsmittel sind insbesondere Geschirrspülmittel, ganz besonders maschinelle Geschirrspülmittel zum Einsatz in einer maschinellen Geschirrspülmaschine bzw. können darin verwendet werden.

Die Reinigungsmitteleinmalportion umfasst eine wasserlösliche Verpackung. Diese Verpackung umfasst mindestens eine wasserlösliche Aufnahmekammer sowie ein diese wasserlösliche Aufnahmekammer verschließendes wasserlösliches Verschlusselement umfasst.

Sie kann auch mehrere wasserlösliche Aufnahmekammern enthalten, die durch das gleiche oder verschiedene wasserlösliche Verschlusselemente verschlossen werden. Erfindungsgemäß befinden sich mindestens eine Gelphase, mindestens ein Pulver und mindestens ein Formkörper der Reinigungsmittelzusammensetzung miteinander in einer einzigen Aufnahmekammer. Weitere Kammern können ähnliche oder andere Reinigungsmittelzusammensetzungen enthalten.

Überraschenderweise hat sich gezeigt, dass Reinigungsmitteleinmalportionen, in denen mindestens eine Gelphase, mindestens ein Pulver und mindestens ein Formkörper vorliegen, besonders gut geeignet sind, die Wünsche des Verbrauchers bezüglich Optik, Haptik, unkomplizierter Handhabung bei gleichzeitigem guten Reinigungsergebnis zu erfüllen. Sie sind darüber hinaus besser zu produzieren und kommen mit einer geringen Menge an Verpackungsmaterial als Mehrkammerbeutel aus.

Bevorzugt umfasst die Verpackung der Reinigungsmitteleinmalportion genau eine wasserlösliche Aufnahmekammer, genau ein wasserlösliches Verschlusselement, und das erfindungsgemäße phosphatfreie Reinigungsmittel.

Besondere Merkmale der wasserlöslichen Verpackung werden im Weiteren ausführlicher beschrieben. Die zum Herstellverfahren gemachten, bevorzugten Ausführungsformen sind ebenfalls für die Reinigungsmitteleinmalportion und umgekehrt zu verstehen.

Die wasserlösliche Verpackung umfasst mindestens eine wasserlösliche Aufnahmekammer, die, wie mit Methoden im Folgenden zum Verfahren ausgeführt, gebildet werden kann. Sie ist aus einem wasserlöslichen Material, bevorzugt einem wasserlöslichen geformten Film oder Formkörper gebildet, der eine Mulde bildet bzw. besitzt, in die die Reinigungsmittelzusammensetzung eingefüllt wird. Die Reinigungsmittelzusammensetzung wird dabei zumindest teilweise in der Aufnahmekammer aufgenommen.

Dabei ist es nicht notwendig, dass die mindestens zwei Verpackungsteile unterschiedlich sind. Sie können bevorzugt aus dem gleichen Material und auf die gleiche Art und Weise hergestellt sein. In einer bevorzugten Ausführungsform handelt es sich dabei um zwei Teile eines wasserlöslichen Films, insbesondere um zwei Teile eines wasserlöslichen Films gleicher Zusammensetzung.

In einer weiteren Ausführungsform können die mindestens zwei Verpackungsteile aus unterschiedlichem Material, z.B. aus unterschiedlichen Filmen oder aus Material mit zwei unterschiedlichen Eigenschaften (z.B. warm- und kaltwasserlösliche Film) hergestellt sein. In dieser Ausführungsform ist es bevorzugt, dass ein wasserlöslicher Film und ein anderes Verpackungsteil, welches durch Spritzguss hergestellt wurde, kombiniert werden.

Gemäß einer besonders bevorzugten Ausführungsform der vorliegenden Erfindung umfasst die wasserlösliche Verpackung mindestens einen zumindest teilweise plastisch verformten Film. Insbesondere kann diese plastische Verformung der Film durch dem Fachmann bekannte Methoden wie Tiefziehen (mit und ohne Anlegen eines Vakuums), Blas- oder Stempelformen hergestellt werden. Insbesondere umfasst die wasserlösliche Umhüllung mindestens ein zumindest teilweise plastisch verformter Film, die durch Tiefziehen hergestellt wurde.

Das Verschlusselement ist ebenfalls aus wasserlöslichem Material, bevorzugt in Form eines Films, gebildet. Gemäß einer besonderen Ausführungsform ist das Verschlusselement vor dem Verschluss der Aufnahmekammer von der Aufnahmekammer getrennt bzw. verschieden.

Die Aufnahmekammer wird mit dem Verschlusselement am Ende des Befüllprozesses haftend verschlossen. Insbesondere wird die Verbindung zwischen der Aufnahmekammer und dem Verschlusselement, insbesondere des wasserlöslichen Films, durch KIeben, Lösungsmittelversiegelung, Wassersiegelung oder Heißsiegeln erzeugt. Die Innenseite des Verschlusselements ist die der Aufnahmekammer zugewandte Seite des Verschlusselements.

Der Gegenstand der vorliegenden Erfindung umfasst eine wasserlösliche Verpackung und eine Reinigungsmittelzusammensetzungen, die mindestens eine Gelphase, mindestens ein Pulver und mindestens einen, vom Pulver und Gelphase(n) verschiedenen, Formkörper umfasst. Die Reinigungsmittelzusammensetzung ist, bevorzugt vollständig, in (bzw. im Innern) der wasserlöslichen Verpackung enthalten. Die Innenseite des Verschlusselements steht dabei in der Reinigungsmitteleinmalportion in Kontakt mit zumindest einem Teil der Reinigungsmittelzusammensetzung. Auch die Innenseite der Aufnahmekammer steht in Kontakt mit zumindest einem Teil der Reinigungsmittelzusammensetzung.

Auf den Einsatz von Phosphaten (darunter sind erfindungsgemäß sowohl das Anion der Phosphorsäure (Orthophosphat) als auch die Kondensationsprodukte von Salzen der orthoPhosphorsäure mit der allgemeinen Summenformel M'ₙ₊₂PₙO₃ₙ₊₁ zu verstehen) wird nahezu vollständig verzichtet. Die Reinigungsmittelzusammensetzung ist daher phosphatfrei, d.h. sie enthalten weniger als 0,1 Gew.-% Phosphat(e). Bevorzugt enthält die gesamte Reinigungsmitteleinmalportion weniger als 0,1 Gew.-% Phosphat(e).

Als Pulver im Sinne der vorliegenden Erfindung ist ein körniges Gemenge zu verstehen, welches aus einer Vielzahl an losen, festförmigen Partikeln gebildet, die wiederum sogenannte Körner umfassen können. Ein Korn ist eine Bezeichnung für die partikulären Bestandteile von Pulvern (Körner sind die losen, festförmigen Partikel), Stäuben (Körner sind die losen festförmigen Partikel), Granulaten (lose, festförmige Partikel sind Agglomerate aus mehreren Körnern) und anderen körnigen Gemengen. Wenn hier von "Pulver" gesprochen wird, ist ebenfalls umfasst, dass es sich dabei auch um Mischungen verschiedener Pulver und/oder verschiedener Granulate und/oder verschiedener Kompaktate handelt. Entsprechend sind mit Pulver auch Mischungen verschiedener Pulver mit verschiedenen Granulaten und Kompaktaten gemeint. Das Pulver umfasst dabei bevorzugt verschiedene Partikel, welche chemisch unterschiedlichen Inhaltsstoffen umfassen. Darüber hinaus kann die optische Erscheinung des Pulvers Texturunterschiede, wie grobe und feine Partikel sowie Partikel oder Bereiche mit unterschiedlichen Farben, gesamt oder als farbige Sprenkel aufweisen. Auch in solchen Fällen ist aber das Pulver bevorzugt eine einzige Phase bzw. wird als solche wahrgenommen.

Das Pulver umfasst daher festförmige Partikel als körniges Gemenge, welche wiederum bevorzugt einen Partikeldurchmesser X_{50,3} (Volumenmittel) von 10 bis 1500 µm, weiter bevorzugt von 200 µm bis 1200 µm, besonders bevorzugt von 400 µm bis 1000 µm, aufweisen. Diese Partikelgrößen können durch Siebung oder mittels eines Partikelgrößenanalysators Camsizer der Fa. Retsch bestimmt werden.

Bevorzugt weisen mindestens 80 % der Partikel einen Partikeldurchmesser von 100 bis 2000 µm, bevorzugt von 150 µm bis 1500 µm auf. Gemäß einer bevorzugten Ausführungsform weist das Pulver Partikel mit einem Partikeldurchmesser X_{50,3} (Volumenmittel) bis 2000 µm, insbesondere bis 1000 µm auf.

Gemäß einer bevorzugten Ausführungsform umfasst das Pulver im Sinne der vorliegenden Erfindung Pulver und/oder Granulate sowie deren Mischungen.

Ein "Formkörper" im Sinne der Erfindung ist ein einzelner Körper, der sich in seiner aufgeprägten Form selbst stabilisiert. Dieser formstabile Körper wird aus einer Formmasse (z.B. einer Zusammensetzung) dadurch gebildet, dass diese Formmasse gezielt in eine vorgegebene Form gebracht wird, z.B. durch Gießen einer fließfähigen Zusammensetzung in eine Gussform und anschließendem Aushärten der flüssigen Zusammensetzung, durch Extrudieren eines Stoffgemisches oder durch Verpressen eines teilchenförmigen Vorgemisches, beispielsweise im Rahmen eines Tablettierverfahrens. Die Raumform des Formkörpers ist grundsätzlich frei wählbar, seine Mantelfläche kann beispielsweise konvex, konkav oder plan ausgestaltet sein. Gleichzeitig haben sich jedoch bestimmte räumliche Ausgestaltungen vor dem Hintergrund der Herstellbarkeit, Lagerung und den Gebrauch der Formkörper als besonders vorteilhaft erwiesen.

In der Reinigungsmitteleinmalportion können mehr als ein Formkörper, beispielsweise zwei, drei oder vier Formkörper enthalten sein. Die Formkörper können hinsichtlich ihrer Raumform oder ihrer Zusammensetzung identisch sein oder sich beispielsweise in Bezug auf ihre Zusammensetzung oder Raumform unterscheiden. Die Formkörper können übereinander oder nebeneinander angeordnet sein und werden in der Regel miteinander in Kontakt stehen. Es können auch mehrere Formkörper in direktem Kontakt mit dem Verschlusselement stehen. Wird die Innenseite des Verschlusselements, wie nachfolgend beschrieben, zu einem gewissen Anteil ihrer Oberfläche durch Formkörper bedeckt, so bezieht sich deren Bedeckungsgrad auf die durch die Gesamtheit der in der Reinigungsmitteleinmalportion enthaltenen Formkörper bewirkte Bedeckung.

Eine Phase im Sinne der vorliegenden Erfindung ist ein räumlicher Bereich, in dem physikalische Parameter und/oder die chemische Zusammensetzung insgesamt homogen sind. Eine Phase unterscheidet sich von einer anderen Phase durch verschiedene Merkmale, beispielsweise Inhaltsstoffe, physikalische Eigenschaften, äußeres Erscheinungsbild etc. Bevorzugt können verschiedene Phasen optisch unterschieden werden. So ist für den Verbraucher die Gelphase eindeutig von der durch das Pulver gebildeten, optisch zusammenhängenden partikulären Phase sowie vom Formkörper zu unterschieden. Weist das erfindungsgemäße Reinigungsmittel mehr als eine Gelphase auf, so können diese ebenfalls jeweils mit dem bloßen Auge voneinander unterschieden werden, weil sie sich beispielsweise in der Farbgebung voneinander unterscheiden. Gleiches gilt, wenn zwei oder mehr Gelphasen vorliegen. Auch in diesem Fall ist eine optische Unterscheidung der Phasen, beispielsweise auf Grund eines Farb- oder Transparenzunterschiedes möglich. Phasen im Sinne der vorliegenden Erfindung sind somit in sich abgeschlossene Bereiche, die vom Verbraucher optisch mit dem bloßen Auge voneinander unterschieden werden können. Die einzelnen Phasen können bei der Verwendung unterschiedliche Eigenschaften aufweisen, wie beispielsweise die Geschwindigkeit, mit der sich die Phase in Wasser löst und somit die Geschwindigkeit und die Reihenfolge der Freisetzung der in der jeweiligen Phase enthaltenen Inhaltsstoffe.

In die erfindungsgemäßen Gelphasen/Formkörper können auch größere Mengen flüssiger Inhaltsstoffe eingebracht werden, die, aufgebracht oder eingearbeitet in einem Pulver, zu einer verringerter Rieselfähigkeit, zu Verklebungen im Pulver und damit zu einer schlechteren Verarbeitbarkeit führen und/oder negativen Wechselwirkungen mit Komponenten des Pulvers auslösen können.

Erfindungsgemäß ist der Formkörper in der Kammer so angeordnet ist, dass er sich nicht in direktem Kontakt mit der mindestens einen Gelphase, bevorzugt mit allen Gelphasen, befindet.

Migrationen, z.B. von Lösungsmitteln oder sonstigen niedermolekularen Verbindungen zwischen Formkörper und Gelphase werden damit reduziert.

Durch die Einführung mindestens einer Gelphase sowie mindestens eines Formkörpers, der unterschiedlich/unterscheidbar von Gelphase und Pulver ist, die nicht miteinander in direktem Kontakt stehen, können diese Wirkstoffe mit negativen Wechselwirkungen sinnvoll und effektiv voneinander getrennt werden, ohne dass dadurch zusätzliches und/oder unnötiges Trennmaterial benötigt wird. Dadurch wird auch die Aktivität des Mittels bzw. die Lagerstabilität verbessert.

Durch eine solche Anordnung mit voneinander getrennten Phasen können vorteilhafterweise negative Interaktionen von Inhaltsstoffen, die nicht miteinander kompatibel sind, reduziert werden, indem solche nicht kompatiblen Inhaltsstoffe jeweils nur in eine der Phasen, den mindestens einen Formkörper, das mindestens eine Pulver bzw. die Gelphase(n) eingearbeitet sind. Die Aktivität solcher Inhaltsstoffe bleibt dann auch über eine längere Zeit erhalten und nimmt, durch den aufgrund der Phasentrennung reduzierten Kontakt zwischen den Phasen mit der Zeit nicht ab.

Gemäß einer bevorzugten Ausführungsform haben die mindestens eine Gelphase und/oder der Formkörper mit dem Pulver Kontakt. Insbesondere haben sowohl die mindestens eine Gelphase, bevorzugt alle Gelphasen mit dem Pulver Kontakt. Ganz besonders bevorzugt ist es, wenn alle Gelphasen und der mindestens eine Formkörper mit dem Pulver Kontakt haben. Dabei haben bevorzugt die Gelphasen und der/die Formkörper keinen direkten Kontakt miteinander. Vorteilhafterweise können so miteinander nicht kompatible Inhaltsstoffe in einer einzigen Kammer eingebracht und wirksam durch die Verteilung in den Gelphasen bzw. dem Formkörper voneinander getrennt werden, so dass eine Verbesserung der Lagerstabilität und/oder der Reinigungsleistung erreicht wird.

In einer bevorzugten Ausführungsform befindet sich das Pulver zwischen der mindestens einen Gelphase und dem Formkörper, so dass die mindestens eine, insbesondere die Gelphase(n) mit dem Pulver, aber nicht mit dem Formkörper Kontakt hat/haben. Vorteilhafterweise können so miteinander nicht kompatible Inhaltsstoffe wirksam voneinander getrennt werden, so dass eine Verbesserung der Lagerstabilität und/oder der Reinigungsleistung erreicht wird.

Bevorzugt befinden sich der Formkörper und die Gelphase(n) nicht in derselben Region/derselben Ebene der Reinigungsmitteleinmalportion. Bevorzugterweise befinden sich die Gelphase(n) im Sinne der Füllrichtung der Reinigungsmitteleinmalportion ganz unten (unterste Ebene), das Pulver in der Mitte (mittlere Ebene) und der Formkörper oben (oberste Ebene), so dass er mit dem Verschlussmittel in direkten Kontakt treten kann. Solche Reinigungsmitteleinmalportionen sind insbesondere durch die weiter unten beschriebenen Herstellverfahren erhältlich.

Gemäß einer besonders bevorzugten Ausführungsform umfasst die Reinigungszusammensetzung mindestens eine Gelphase, mindestens ein Pulver und mindestens einen Formkörper.

Die erfindungsgemäß in der wasserlöslichen Aufnahmekammer enthaltene mindestens eine Gelphase und der erfindungsgemäße Formkörper sind dabei voneinander verschieden. Sie sind zumindest optisch voneinander trennbar und bilden verschiedene Phasen.

Bevorzugt ist die mindestens eine Gelphase nicht in Kontakt mit dem Verschlusselement, insbesondere sind alle Gelphasen nicht in Kontakt mit dem Verschlusselement.

Gemäß einer bevorzugten Ausführungsform umfasst die Reinigungsmitteleinmalportion mindestens eine, von dem Formkörper verschiedene, Gelphase. Dabei ist die mindestens eine Gelphase in der Aufnahmekammer enthalten.

Die mindestens eine Gelphase und der mindestens eine Formkörper sind in ihren Materialeigenschaften und/oder Herstellungsweisen in mindestens einer Hinsicht unterschiedlich und voneinander verschieden. Beispielsweise unterscheiden sie sich hinsichtlich ihrer chemischen Zusammensetzung und/oder ihrer physikalischen Eigenschaften (besonders bevorzugt ihrer Transluzenz, Festigkeit, Elastizität).

Gemäß einer bevorzugten Ausführungsform weisen der Formkörper und die mindestens eine Gelphase unterschiedliche chemische Zusammensetzungen auf. Insbesondere unterscheidet sich der mindestens eine Formkörper von der mindestens einen Gelphase in der chemischen Zusammensetzung, insbesondere durch die Art und/oder Menge der enthaltenen Inhaltsstoffe. Insbesondere weist die mindestens eine Gelphase eine, nicht geringfügige, Abweichung von der Zusammensetzung des mindestens einen Formkörpers auf.

Die mindestens eine Gelphase weist daher bevorzugt eine Zusammensetzung auf, in der weniger als 85 Gew.-%, bevorzugt weniger als 80 Gew.-%, insbesondere weniger als 75 Gew.-% der Inhaltsstoffe, bezogen auf das Gesamtgewicht der Gelphase, mit der Zusammensetzung des Formkörpers identisch sind.

Gemäß einer bevorzugten Ausführungsform umfasst die Gelphase mindestens zwei, bevorzugt mindestens drei, insbesondere bevorzugt mindestens vier Inhaltsstoffe, die nicht in dem mindestens einen Formkörper enthalten sind und/oder es umfasst der mindestens eine Formkörper mindestens zwei, bevorzugt mindestens drei, insbesondere bevorzugt mindestens vier Inhaltsstoffe, die nicht in der mindestens einen Gelphase enthalten sind.

Dies hat den Vorteil, dass inkompatible Inhaltsstoffe auf die unterschiedlichen Phasen (Gelphase(n), Formkörper, Pulver) so verteilt werden können, so dass der direkte Kontakt dieser Inhaltsstoffe minimiert und Nebenreaktionen/Aktivitätsverluste verringert werden, ohne dass zusätzliche, prozesstechnisch aufwändige Trennungsmaßnahmen, wie z.B. zusätzliche Trennwände innerhalb der Reinigungsmitteleinmalportion notwendig sind.

Erfindungsgemäß ist die Gelphase bei Raumtemperatur (20 °C, 1 bar) formstabil. Dazu nutzt man eine fließfähige Mischung, welche in eine gewünschte Form gebracht werden kann.

Nach einem gewissen Zeitraum erhält man eine Gelphase, die in der vorgegebenen Form bleibt, also formstabil ist. Dieser Zeitraum, die Erstarrungszeit, beträgt vorzugsweise 15 Minuten oder weniger, vorzugsweise 10 Minuten oder weniger, besonders bevorzugt 5 Minuten oder weniger, ganz besonders bevorzugt 2 Minuten und weniger. Die mindestens eine Gelphase ist vorzugsweise elastisch, insbesondere linear-elastisch. Dabei gibt die mindestens eine Gelphase auf Druck nach, verformt sich hierdurch jedoch nicht, sondern kehrt nach Wegfall des Drucks in den Ausgangszustand zurück. Die mindestens eine Gelphase ist schnittfest. Sie kann beispielsweise mit einem Messer nach der Erstarrung geschnitten werden, ohne dass sie, außer dem durchgeführten Schnitt, weiter zerstört wird. Weiterhin ist die mindestens eine Gelphase insbesondere flexibel. Auf Grund der Flexibilität und Elastizität kann sie eine beliebige Form annehmen. Dies bedeutet auch eine Bruchfestigkeit, wodurch eine gute Handhabung bei der Herstellung und im Hinblick auf Transport und Lagerung ermöglicht wird.

Bevorzugt ist die mindestens eine Gelphase elastisch, während der erfindungsgemäße Formkörper nur eine geringe Elastizität aufweist.

Für die Messung der Elastizität der mindestens eine Gelphase wurde ein Kraft/Weg Diagramm erstellt. Dabei wurde die Masse in einen Gelkörper mit den Maßen 47x19x8mm gegossen und vor der Messung 12h bei Raumtemperatur gelagert. Die Probenaufnahme erfolgte in modifizierte Kunststoffeinsätzen mit dem Außenmaß 25x20x20mm mit einer Aussparung für die zu messende Masse von 10x10x20mm. Als Messgerät wurde ein Lloyd LRX+ (Lloyd Ìnstruments) mit einem 5kN Messkopf verwendet, dabei wurde ein Vorschub von 50 mm/min sowie eine Messaufnahme bei 1 N Vorspannung (Nullpunkt) eingestellt. Als Ergebnis wird die Kraft in N angegeben, die notwendig ist, um den Formkörper um 8mm zusammenzudrücken. Aufgrund der Elastizität der Gelphase stellen sich die Ausgangsmaße des Gelphase nach Beendigung der Messung innerhalb einer Zeitspanne von 15 min wieder ein. Bevorzugt liegen die so gemessenen Werte (für eine Kompression um 8 mm) zwischen 10 N und 40 N, bevorzugt zwischen 15 N und 30 N.

Gemäß einer weiteren bevorzugten Ausführungsform weisen die mindestens eine Gelphase und der mindestens eine Formkörper unterschiedliche Elastizitäten auf. Besonders bevorzugt ist es, dass die mindestens eine Gelphase verformbar und/oder elastisch ist, während der mindestens eine Formkörper nicht leicht verformbar und/oder weniger elastisch ist. Eine geringere Elastizität eines Formkörpers, insbesondere, wenn er direkt mit dem Verschlusselement in Kontakt steht, zu einer Versteifung und Stabilisierung der Grundform der Reinigungsmitteleinmalportion. Die Fixierung des Pulvers wird dadurch gewährleistet, ohne dass die Reinigungsmitteleinmalportion an Festigkeit und Struktur verliert.

Für die Messung der geringen Elastizität und/oder Bruchfestigkeit des Formkörpers wurde ein Kraft/Weg Diagramm erstellt. Dabei wurde ein Formkörper mit den Maßen 45 x 35 x 3,4 mm erzeugt und vor der Messung 12h bei Raumtemperatur gelagert. Der zu prüfende Körper wird so auf die Backen eines Schraubstocks aufgelegt, dass er stabil aufliegt und sich zwischen 70 und 90 % der Fläche des Prüfkörpers frei zwischen den beiden Auflageflächen (Backen) befindet.

Als Messgerät wurde ein Texture Analyser TA.XT plus (Firma: Stable Micro Systems Ltd) unter Verwendung der Software Exponent (Stable Micro Systems Ltd.) mit einem Kugelkörper mit einem Durchmesser von 19 mm genutzt. Dabei wurde ein Vortestvorschub von 1 mm/sec, ein Testvorschub von 0,5 mm/s, ein Nachtestvorschub von 2 mm/s sowie eine Vorprüfkraft von 5 Gramm bei einem Abstand ("Distance") von 3 mm eingestellt. Als Ergebnis wird die Eindringtiefe des Kugelkörpers in mm angegeben, die notwendig ist, damit der Formkörper zerbricht. Die bevorzugten Formkörper zerbrachen bei den oben genannten Einstellungen bei einer Eindringtiefe von 0,1 mm bis 1,0 mm, bevorzugt von 0,15 mm bis 0,8 mm, insbesondere von 0,2 bis 0,6 mm.

Gemäß einer besonders bevorzugten Ausführungsform enthält die Gelphase kein Dibenzylidensorbitol. Gemäß einer ganz besonders bevorzugten Ausführungsform enthält die Gelphase keine Benzylidenalditol-Verbindung. Gemäß einer besonders bevorzugten Ausführungsform enthalten die Reinigungsmittel Pulver und in der mindestens eine Gelphasemindestens einen Gelphase kein Dibenzylidensorbitol, insbesondere kein Benzylidenalditol.

Erfindungsgemäß bevorzugt befindet sich der Formkörper in Kontakt (in direktem Kontakt) mit dem Verschlusselement, insbesondere mit dessen Innenseite. Das bedeutet, dass der mindestens eine Formkörper und auch das mindestens ein Pulver innerhalb der wasserlöslichen Verpackung angeordnet sind.

Die erfindungsgemäße bevorzugte Anordnung, dass die Innenseite des Verschlusselements zu weniger als 10 % ihrer Oberfläche in Kontakt mit dem Pulver steht, ist für die effiziente, insbesondere störungsfreie Herstellung, Festigkeit des Verschlusses zwischen Aufnahmekammer und Verschlusselement, und die optischen Eigenschaften der Einmalportion von Vorteil, da in diesem Fall weniger Möglichkeit für das Pulver besteht, auf die Verschlussflächen, z.B. bei tiefgezogenen Aufnahmekammern auf die Flächen direkt neben der ausgebildeten Kammer, zu gelangen.

Insbesondere, wenn es sich bei dem Verschlusselement um einen wasserlöslichen Film handelt, ist es wichtig, dass die Verbindungsfläche zwischen Aufnahmekammer und Verschlusselement keine Partikel des Pulvers aufweist, da sonst die Siegelung zwischen der Aufnahmekammer und dem Verschlusselement nicht vollständig und im schlimmsten Fall durchlässig für die Reinigungsmittelzusammensetzung ist. Auch kann die Stabilität der Einmalportion, insbesondere bei Lagerung und/oder Transport, dadurch verbessert werden, dass das Pulver, wenn es in nur in geringem Maße Kontakt mit der Innenseite des Verschlusselements aufweist, das Verschlusselement nicht verletzt, ausbeult bzw. sogar an einigen Stellen durchsticht bzw. durch längere Reibung abträgt und/oder durchscheuert. Wird der Kontakt des Pulvers mit der Innenseite des Verschlusselements verringert bzw. vermieden, kann die Dicke des Verschlusselements, z. B. die Dicke der Verschlussfilms, geringer gewählt werden, was im Hinblick auf die Nachhaltigkeit durch Einsatz von weniger Verpackungsmaterial vorteilhaft ist.

In einer besonders bevorzugten Ausführungsform enthält die Reinigungsmitteleinmalportionen genau einen Formkörper, der erfindungsgemäß so angeordnet ist, dass er sich in direktem Kontakt mit dem Verschlusselement befindet. Dies vereinfacht die Produktion solcher Einmalportionen dadurch, dass nur ein einziger Formkörper aufgebracht, eingelegt oder in sonstiger Weise platziert werden muss.

Gemäß einer bevorzugten Ausführungsform ist der erfindungsgemäße Formkörper ein vorgeformter Formkörper. Ein solcher vorgeformter Formkörper hat seine Form bereits vor Einbringung in die Aufnahmekammer erhalten. Dadurch ist die Produktion des Formkörpers von der Produktion der Einmalportion (insbesondere zeitlich) entkoppelt. Die Produktionsschritte der gesamten Reinigungsmitteleinmalportion können dadurch in einer schnellen Abfolge hintereinander durchgeführt werden und verlängern sich nicht durch die Erstarrungszeiten des Formkörpers, die notwendig sind, wenn dieser Formkörper in situ hergestellt wird, beispielsweise als fließfähige Vormischung in die Aufnahmekammer eingebracht wird.

Auch können in den Formkörper, insbesondere solche, die vorgeformt werden, Inhaltsstoffe eingearbeitet werden, die in Gelphasen, insbesondere solchen, die als fließfähige Zusammensetzung in die Aufnahmekammer eingebracht werden, aufgrund der Verarbeitbarkeit der Inhaltsstoffe selbst, des Herstellprozesses der Gelphasen, und/oder ihrer sonstigen Materialeigenschaften nicht eingearbeitet werden können.

Im Rahmen bevorzugter Ausgestaltungen der vorliegenden Erfindung steht die Innenseite des Verschlusselements zu weniger als 8 %, insbesondere zu weniger als 6 %, ganz besonders zu weniger als 3% ihrer Oberfläche in Kontakt mit dem Pulver. Je weniger Kontakt die Oberfläche der Innenseite des Verschlusselements mit dem Pulver hat, umso stabiler ist die Reinigungsmittelportion sowohl bei Herstellung als auch bei Lagerung.

Erfindungsgemäß bevorzugt ist dabei mindestens ein Formkörper so angeordnet, dass er sich in direktem Kontakt mit dem Verschlusselement befindet und die Innenseite des Verschlusselements zu weniger als 10 %, ihrer Oberfläche in Kontakt mit dem Pulver steht.

Gemäß einer besonders bevorzugten Ausführungsform steht die Innenseite der Verschlusselements nicht in Kontakt mit dem Pulver. Die bereits beschriebenen Vorteile sind in dieser Ausgestaltung am größten.

Gemäß einer bevorzugten Ausführungsform ist der Formkörper in der Kammer so angeordnet ist, dass er sich in direktem Kontakt mit dem Pulver befindet. So kann der Formkörper das Pulver gut abdecken, so dass es nicht in Kontakt mit der Innenseite des Verschlusselements kommt und ggf. die Dichtigkeit des Verschlusses der Einmalportion beeinträchtigt.

Gemäß einer bevorzugten Ausführungsform ist der Formkörper so angeordnet, dass die Innenseite des Verschlusselements zu mehr als 70 %, bevorzugt zu mehr als 75 %, insbesondere zu mehr als 80 %, ganze besonders zu mehr als 85% ihrer Oberfläche von dem mindestens einen Formkörper bedeckt wird. Dies kann insbesondere dadurch erfolgen, dass der Formkörper nach Einfüllen des Pulvers in die Aufnahmekammer von oben auf oder in die Aufnahmekammer gebracht wird. Dabei bedeckt dann der Formkörper die durch das Pulver gebildete Phase in großem Maße und verhindert zumindest größtenteils den Kontakt des Pulvers mit der Oberfläche der Innenseite des Verschlusselements nach dem Verschließen der Reinigungseinmalportion. Die zuvor beschriebenen negativen Folgen eines großflächigen Kontakts der Oberfläche mit dem Pulver werden dadurch vermieden. Das Verschlusselement liegt bei dem direkten Kontakt auf dem Formkörper auf.

Gemäß einer bevorzugten Ausführungsform weist die Seite des Formkörpers, welche mit dem Verschlusselement in Kontakt steht (Kontaktseite), zu mindestens 70 %, bevorzugt mindestens 75 %, insbesondere zu mindestens 80 %, besonders bevorzugt zu mehr als 85 % ihrer Oberfläche Kontakt mit der Innenseite des Verschlusselements auf. Diese Ausgestaltungsform hat den Vorteil, dass durch diese Anordnung vermieden wird, dass Partikel des Pulvers nach der Produktion, beispielsweise beim Transport, zwischen das Verschlusselement und den Formkörper gelangen können. Die vorstehend ausgeführten Probleme des Aufscheuerns, Durchstechens usw. werden dadurch weiter reduziert.

Besonders bevorzugt weist diese Seite des Formkörpers einen im wesentlichen vollflächigen Kontakt mit dem Verschlusselement auf. Im wesentlichen vollflächig bedeutet, dass mindestens 90% der Oberfläche der Kontaktseite mit der Innenseite des Verschlusselements in direktem Kontakt steht. Das Verschlusselement liegt dann bei dem direkten Kontakt auf dem Formkörper auf.

Bevorzugt ist es, wenn der Formkörper mindestens eine im Wesentlichen flache Seite aufweist. Im Wesentlichen flach im Sinne der Erfindung bedeutet, dass die flache Seite des Formkörpers keine größeren Erhebungen oder Vertiefungen aufweist. Dabei beträgt die Abweichung 10 % und weniger, bevorzugt um 5 % und weniger. Dabei können die Unterseite, die sich bevorzugt in Kontakt mit dem Pulver befindet, und/oder die Oberseite, die sich im Kontakt mit der Innenseite des Verschlusselements befindet, im Wesentlichen flach sein. Bevorzugt weist der Formkörper mindestens eine im Wesentlichen flache Ober- und/oder Unterseite auf.

Die erfindungsgemäßen Formkörper weisen vorzugsweise eine flache Unterseite auf, deren größte Diagonale größer ist als die Höhe des Formkörpers. Bevorzugt beträgt deren größte Diagonale mehr als das 1,5-fache, vorzugsweise mehr als das 2-fache der Höhe des Formkörpers beträgt, wobei der Formkörper mit der flachen Unterseite auf die Oberfläche des Pulvers aufgebracht ist. Eine solche Anordnung führt zu einer besonders großflächigen Abdeckung der Innenseite des Verschlusselements, ohne den innerhalb der Aufnahmekammer zur Verfügung stehenden Raum deutlich zu reduzieren.

In einer weiteren bevorzugten Ausführungsform weist der Formkörper eine zur Unterseite im Wesentlichen planparallele Oberseite auf. Im Wesentlichen planparallele Oberfläche bedeutet, dass Abweichungen von einer vollständigen Parallelität von etwa 10 %, bevorzugt 5 % weiterhin möglich sind. Solche Oberflächen kommen durch Produktionsabweichungen bzw. bestimmte Produktionsverfahren zustande und zeigen beispielweise leicht angeraute, hubbelige Oberflächen. Solche Oberflächen sind jedoch erfindungsgemäß mit umfasst. Diese Ausgestaltung führt vorteilhafterweise dazu, dass auf eine planparallele Oberseite einfach ein flaches Verschlusselement (insbesondere einen flachen, wasserlöslichen Film) aufbringen lässt.

Die Unterseite des Formkörpers ist dabei insbesondere mit dem Pulver in Kontakt, die Oberseite mit dem Verschlusselement.

Gemäß einer bevorzugten Ausführungsform umfasst das Verschlusselement einen wasserlöslichen Film. Das Verschlusselement ist dabei bevorzugt ein wasserlöslicher Film. Geeignete wasserlösliche Filme sind im Zusammenhang mit den erfindungsgemäßen Verfahren eingehender beschrieben.

Aufgrund der erfindungsgemäßen Anordnung, bei der möglichst wenig Pulver in Kontakt mit dem die Aufnahmekammer verschließenden wasserlöslichen Film tritt, kann, dadurch dass die vorstehend genannten negativen Effekte durch das Pulver nicht auftreten, die Dicke des Films reduziert werden, da wenig Kontakt mit dem Pulver vorliegt. Dies hat den Vorteil, dass und somit zur umweltschonenden, nachhaltigen Nutzung von Verpackungsmaterial ein Film ausgewählt werden kann, der eine geringere Dicke aufweist, als die bei üblichen wasserlöslichen Einmalportionen eingesetzt wird.

Gemäß einer besonders bevorzugten Ausführungsform weist der wasserlösliche Film, eine Dicke von 80 µm oder weniger, bevorzugt von 70 µm oder weniger, insbesondere von 65 µm oder weniger, insbesondere bevorzugt 60 µm auf. Ganz besonders bevorzugt kann die Dicke des Films 55 µm oder weniger betragen, was zu einer deutlichen Einsparung von Verpackungsmaterial führt.

In einer weiteren bevorzugten Ausführungsform weist die wasserlösliche Folie, die das Verschlusselement bildet, eine geringere Dicke als die durchschnittliche Dicke der wasserlöslichen Aufnahmekammer auf. Dabei wird die durchschnittliche Dicke der wasserlöslichen Aufnahmekammer durch Messung der Dicke bestimmt und das arithmetische Mittel gebildet. Dies führt ebenfalls zu einer Einsparung von Material für die Verpackung der Einmalportion.

Gemäß einer weiteren bevorzugten Ausführungsform weist der Formkörper, der sich in Kontakt mit dem Verschlusselement befindet im Wesentlichen eine gleiche Höhe auf. Der Formkörper ist dabei im Wesentlichen gleich dick. Die im Wesentlichen gleiche Höhe liegt vor, wenn die Höhe an einzelnen Stellen des Formkörpers um 10 % und weniger, bevorzugt um 5 % und weniger abweicht.

Bevorzugt ist es, wenn der Formkörper flach ist. Die Formkörper weisen vorzugsweise eine flache Unterseite auf, deren größte Diagonale größer ist als die Höhe (=Dicke) des Formkörpers, wobei der Formkörper mit der flachen Unterseite auf die Oberfläche des Pulvers aufgebracht wird. Entsprechenden Formkörper sind nicht nur in einfacher Weise, beispielsweise mittels Gießverfahren oder Tablettierung herstellbar, sie lassen sich zudem auch in einfacher Weise maschinell auf das Pulver auflegen.

Insbesondere bevorzugt ist es, wenn der Formkörper eine flache Unterseite aufweist, deren größte Diagonale mehr als das 1,5-fache, vorzugsweise mehr als das 2-fache der Höhe des Formkörpers beträgt, wobei der Formkörper mit der flachen Unterseite auf die Oberfläche des Pulvers aufgebracht wird. Dadurch wird eine hervorragende Abdeckung des Pulvers, insbesondere bei hohen Bedeckungsgraden, erzeugt.

In einer ganz besonders bevorzugte Ausführungsform der vorliegenden Erfindung weist der Formkörper, der sich in Kontakt mit dem Verschlusselement befindet, eine Höhe von 2,5 bis 9 mm, bevorzugt 2,75 bis 6,0 mm, insbesondere 3,0 bis 5,5 mm. Solche Formkörper sind besonders geeignet, den vorhandenen Raum der Aufnahmekammer in Kombination mit dem Pulver auszunutzen und gleichzeitig die Vorteile der Abdeckung des Pulvers gegenüber dem Verschlusselement zu erzielen. Gleichzeitig wird die gesamte Reinigungsmitteleinmalportion durch die Anwesenheit solcher Formkörper stabilisiert. Formkörper mit deutlich geringeren Höhen als angegeben sind in der Regel bruchempfindlicher, wodurch sie den erfindungsgemäßen Zweck von Beginn nicht oder nicht über die gesamte Transport- und/oder Lagerdauer erfüllen können. Viel dickere Formkörper haben den Nachteil, dass sie in der Raumnutzung der Reinigungsmitteleinmalportion zu wenig Platz für weitere wichtige Komponenten lassen, die nicht ohne größeren Aufwand und/oder Aktivitätsverlust in den Formkörper eingearbeitet werden können.

Bevorzugt ist es insbesondere, wenn solche (bevorzugt im wesentlichen flachen) Formkörper der genannten Dicke/Höhe, insbesondere einer Höhe/Dicke von 2,75 bis 6,0 mm einen hohen Bedeckungsgrad der Innenseite des Verschlusselements von bevorzugt mehr als 80 %, besonders bevorzugt von mehr als 85% ihrer Oberfläche erzeugen, wodurch der durch die Aufnahmekammer zur Verfügung gestellte Raum für die verschiedenen Komponenten/Phasen der Reinigungsmittel-zusammensetzung besonders günstig genutzt wird, ohne dass Pulver in größerem Ausmaß mit dem Verschlusselement, in Kontakt kommt und zu den bereits genannten negativen Folgen, wie Aufscheuerns, Durchstechens des Verschlusselements, insbesondere einer Verschlussfolie, werden dadurch weiter reduziert.

Gemäß einer besonders bevorzugten Ausführungsform weist der Formkörper eine im Wesentlichen flache Ober- und Unterseite auf, dabei weist die Oberseite im wesentlichen vollflächigen Kontakt mit dem Verschlusselemente auf.

Gemäß einer weiteren bevorzugten Ausführungsform beträgt das Gesamtgewicht der Reinigungsmitteleinmalportion von 10 g bis 25 g, bevorzugt von 12 bis 22 g, besonders bevorzugt von 13 g bis 20 g. Solche Reinigungsmittelportionen sind dazu geeignet, einerseits die Dosierkammer von Geschirrspülmaschinen gut auszunutzen, aber nicht übermäßig viel Verpackungsmaterial zu benötigen.

Das Gesamtgewicht des Pulvers in den erfindungsgemäßen Reinigungsmitteleinmalportionen, beträgt von 12 bis 22 g, beträgt bevorzugt von 7 g bis 20 g, bevorzugt von 8 bis 15 g, besonders bevorzugt von 10 g bis 12 g.

Bevorzugt beträgt das Gesamtgewicht eines Formkörpers in den erfindungsgemäßen Reinigungsmitteleinmalportionen in einer weiteren Ausführungsform, von 4 g bis 8 g, bevorzugt von 5 bis 7 g.

Gemäß einer weiteren bevorzugten Ausführungsform beträgt das Gewichtsverhältnis von Pulver zu Formkörper von 4:1 bis 1:1, bevorzugt von 3,75:1 bis 1,25:1, insbesondere von 3,5:1 bis 1,5:1, ganz besonders bevorzugt von 3,25:1 bis 1,75:1. Solche Verhältnisse haben sich hinsichtlich der Raumnutzung in den erfindungsgemäßen Reinigungsmitteleinmalportionen als besonders günstig erwiesen. Insbesondere können dadurch die verschiedenen Aktivstoffe in Pulver und Formkörper gut verteilt und gleichzeitig getrennt werden.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist. Alle Prozentangaben sind, sofern nicht anders angegeben, Gewichts-%. Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Bleichkatalysator" bedeutet somit beispielsweise mindestens eine Art von Bleichkatalysator, d.h. dass eine Art von Bleichkatalysator oder eine Mischung mehrerer verschiedener Bleichkatalysatoren gemeint sein kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Wenn hierin auf Molmassen Bezug genommen wird, beziehen sich diese Angaben immer auf die zahlenmittlere Molmasse Mₙ, sofern nicht explizit anders angeben. Das Zahlenmittel der Molmasse kann beispielsweise mittels Gel-Permeations-Chromatographie (GPC) gemäß DIN 55672-1:2007-08 mit THF als Eluent bestimmt werden. Die massenmittlere Molmasse M_{w} kann ebenfalls mittels GPC bestimmt werden, wie für Mₙ beschrieben.

Alle Prozentangaben, die im Zusammenhang mit den hierin beschriebenen Zusammensetzungen gemacht werden, beziehen sich, sofern nicht explizit anders angegeben, auf Gew.-%, jeweils bezogen auf die betreffende Phase (also jeweils das Pulver, die Gelphase(n), den Formkörper).

An Formulierungen der mindestens einen Gelphase werden bestimmte Mindestanforderungen gestellt. So muss, wie bereits ausgeführt, die Gelphase innerhalb einer möglichst kurzen Zeit erstarren. Lange Erstarrungszeiten würden zu einer langen Produktionsdauer und damit zu hohen Kosten führen. Erfindungsgemäß bedeutet Erstarrungszeit der Zeitraum, innerhalb dessen bei der Herstellung die mindestens eine Gelphase von einem bei 20 °C fließfähigen in einen bei Raumtemperatur nicht-fließfähigen, formstabilen Zustand übergeht. Unter Raumtemperatur ist dabei eine Temperatur von 20 °C zu verstehen.

Weiterhin muss die Gelphase lagerstabil sein, und zwar bei üblichen Lagerbedingungen. Die erfindungsgemäße Gelphase ist Bestandteil eines Reinigungsmittels. Reinigungsmittel werden in einem Haushalt üblicherweise über einen gewissen Zeitraum gelagert. Die Lagerung erfolgt üblicherweise in der Nähe der Wasch- bzw. Spülmaschine. Für eine solche Lagerung sollte die Gelphase stabil sein. Somit sollte die Gelphase insbesondere auch nach einer Lagerzeit von beispielsweise 4 bis 12 Wochen, insbesondere 10 bis 12 Wochen oder länger bei einer Temperatur von bis zu 40°C, besonders bei 30 °C, insbesondere bei 25 °C oder bei 20 °C stabil sein und sich in dieser Zeit nicht verformen oder sonst wie in der Konsistenz ändern.

Gemäß einer bevorzugten Ausführungsform wird die mindestens eine Gelphase in situ in die Aufnahmekammer eingeführt und erstarrt zu bei 1 bar und 20 °C festen Gelphase(n), während der Formkörper vorgefertigt ist, und als fester Körper in die Reinigungsmittelportion eingeführt wird.

Optisch sollte sich die Oberfläche Gelphase beispielsweise durch einen ausgeprägten Glanz deutlich vom Pulver und/oder dem Formkörper unterscheiden. Die Oberfläche des Pulvers ist üblicherweise nicht glänzend, sondern matt, glanzlos oder stumpf, so dass durch einen Glanz eine gute Unterscheidung, welche das Reinigungsmittel für den Verbraucher attraktiv macht, möglich ist. Der Formkörper ist hingegen bevorzugt nicht transparent.

Nachteilig wäre eine Volumenänderung oder Schrumpfung während der Lagerung, da hierdurch die Akzeptanz des Produktes beim Verbraucher gering wäre. Auch ein Austritt von Flüssigkeit oder das Ausschwitzen von Bestandteilen aus der Gelphase ist unerwünscht. Auch hier ist zum einen der optische Eindruck von Relevanz. Durch den Austritt von Flüssigkeit, wie beispielsweise Lösungsmittel, kann die Stabilität der Gelphase beeinflusst werden, so dass die Bestandteile nicht mehr stabil enthalten sind und dadurch auch die Wasch- bzw. Reinigungswirkung beeinflusst werden kann.

Bevorzugt ist es, dass die Reinigungsmitteleinmalportion zwei oder mehr, bevorzugt drei oder mehr, von dem Formkörper verschiedene, Gelphasen in der Kammer enthält. Dabei können die Gelphasen optisch gleich sein oder sich durch Ausgestaltung oder Farbe unterscheiden. Weiterhin können in der Reinigungsmittelportion mehrere Gelphasen vorliegen, die sich in ihrer chemischen Zusammensetzung durch die die An- bzw. Abwesenheit einer oder mehrere Aktivstoffe unterscheiden**.** Bevorzugt bleibt aber die chemische Zusammensetzung im Wesentlichen gleich. Vor allem sind die Gelphasen aber weiterhin von dem mindestens einen Formkörper verschieden.

Eine im Wesentlichen gleiche chemische Zusammensetzung der Gelphasen untereinander liegt dann vor, wenn die chemische Zusammensetzung der Gelphasen untereinander zu mindestens 85 Gew.-% der Inhaltsstoffe identisch ist. Bevorzugt können Inhaltsstoffe in einem Bereich von 0,001 bis 14 Gew.-%**,** bevorzugt von 0,01 bis 10 Gew.-%, besonders bevorzugt von 0,1 bis 7 Gew.-% der Inhaltsstoffe bezogen auf das Gesamtgewicht der jeweiligen Gelphase verändert sein. Das hat den Vorteil, dass die Eigenschaften der Gelphasen, insbesondere die Verarbeitungseigenschaften, sich nicht in einem solchen Maße ändern, dass sich die Herstellungs- und Verarbeitungsbedingungen deutlich verändern. Größere Veränderungen in der Zusammensetzung der Gelphasen als vorstehend beschrieben wirken sich negativ auf solche Eigenschaften, insbesondere auf die Verarbeitungseigenschaften, wie z.B. Erstarrungszeit, aus.

Eine oder ggf. mehrere Gelphasen können zudem vorzugsweise transluzent (durchscheinend) oder transparent sein, wodurch sich ein guter optischer Eindruck ergibt. Bevorzugt liegt die Transmission der Gelphase (ohne Farbstoff) in einem Bereich zwischen 100 % und 20 %, zwischen 100 % und 30 %, insbesondere zwischen 100 % und 40 %. Zur Messung der Lichtdurchlässigkeit (Transmission) wurde die Durchgängigkeit in % bei 600 nm gegen Wasser als Referenz bei 20 °C ermittelt. Die Masse wurde dafür in die vorgesehenen 11 mm Rundküvetten gegossen und nach 12 h Lagerzeit bei Raumtemperatur in einem LICO 300 Farbmesssystem nach Lange vermessen. Dabei können beispielsweise alle oder keine der Gelphasen transzulent oder transparent sein. Das Vorliegen von opaken und transluzenten Gelphasen in der Reinigungsmitteleinmalportion ist erfindungsgemäß bevorzugt.

Gemäß einer bevorzugten Ausführungsform sind mehrere Gelphasen in der Aufnahmekammer nebeneinander angeordnet. Dabei befinden sich die Gelphasen bevorzugt nicht in direktem Kontakt miteinander.

Gemäß einer besonders bevorzugten Ausführungsform sind drei oder vier Gelphasen in der Aufnahmekammer angeordnet, die von dem Formkörper verschieden sind.

Des Weiteren ist es bevorzugt, dass die mindestens ein Pulver und die mindestens eine Gelphase in einem unmittelbaren/direkten Kontakt miteinander stehen. In diesem Fall soll es keine negative Wechselwirkung zwischen den Inhaltsstoffen des Pulvers und der Gelphase(n) geben. Keine negative Wechselwirkung bedeutet hier beispielsweise, dass keine Inhaltsstoffe oder Lösungsmittel aus einer Phase in die andere übertreten oder dass die Stabilität, insbesondere Lagerstabilität, bevorzugt bei 4 Wochen und 30 °C Lagertemperatur, und/oder die Ästhetik des Produktes in irgendeiner Form, beispielsweise durch Farbveränderung, Ausbildung von feuchtwirkenden Rändern, unscharf werdenden Grenze zwischen den beiden Phasen oder ähnlichem, beeinträchtigt wird.

Überraschenderweise hat sich gezeigt, dass eine besonders gute Lagerstabilität erreicht wird, wenn die Gelphase wasserarm ist. Wasserarm im Sinne der vorliegenden Erfindung bedeutet das geringe Mengen an Wasser zur Herstellung der mindestens eine Gelphase eingesetzt werden können. Der Anteil an Wasser in der Gelphase beträgt insbesondere 20 Gew.-% oder weniger, bevorzugt 15 Gew.-% oder weniger, besonders 12 Gew.-%, oder weniger, insbesondere zwischen 10 und 5 Gew.-%. Die Angaben in Gew.-% beziehen sich auf das Gesamtgewicht der Gelphase.

Gemäß einer weiteren Ausführungsform ist die Gelphase, das Pulver und/oder der Formkörper im Wesentlichen wasserfrei. Dies bedeutet, dass die Gelphase bevorzugt im Wesentlichen frei von Wasser ist. "Im Wesentlichen frei" bedeutet hier, dass die verschiedenen Phasen geringe Mengen an Wasser enthalten sein können. Dieses Wasser kann beispielsweise durch ein Lösungsmittel oder als Kristallwasser oder auf Grund von Reaktionen von Bestandteilen der Phase miteinander in die Phase eingebracht werden. Der Anteil an Wasser an der jeweiligen Phase beträgt in dieser Ausführungsform 4,9 Gew.-% oder weniger, 4 Gew.-% oder weniger, bevorzugt 2 Gew.-% oder weniger, insbesondere 1 Gew.-% oder weniger, besonders 0,5 Gew.-% oder weniger, insbesondere 0,1 Gew.-% oder 0,05 Gew.-% oder weniger. Die Angaben in Gew.-% beziehen sich auf das Gesamtgewicht der jeweiligen Phase (Gelphase, Pulver, Formkörper).

Gemäß einer besonders bevorzugten Ausführungsform beträgt Gewicht aller Gelphasen von 0,1 g und 4 g, bevorzugt von 0,4 bis 3 g, insbesondere bevorzugt 0,7 bis 2,5 g.

Insbesondere in Reinigungsmitteleinmalportionen, die ein Gesamtgewicht von 12 bis 22 g, besonders bevorzugt von 13 g bis 20 g aufweisen, und mindestens einen Formkörper mit einem Gesamtgewicht von 4 bis 8, insbesondere von 5 bis 7 g, sowie Pulver in einem Gesamtgewicht von 8 bis 15 g, besonders bevorzugt von 10 g bis 12 g, aufweisen, beträgt das Gewicht aller Gelphasen 0,4 bis 3 g, insbesondere bevorzugt 0,7 bis 2,5 g.

Gemäß einer weiteren bevorzugten Ausführungsform beträgt das Gewichtsverhältnis des Formkörpers zur Gelphase(n) (Summe aller Gelphasen), von 8:1 bis 1:2, bevorzugt von 6:1 bis 1:1, insbesondere von 4,5:1 bis 1,5:1, ganz besonders bevorzugt von 4:1 bis 1,75:1. Im Falle von mehreren Gelphasen dient das Gesamtgewicht aller Gelphasen zur Berechnung der angegebenen Gewichtsverhältnisse (entsprechend der Summe aller Gelphasen). Solche Verhältnisse führen zu einer besonders guten Ausnutzung der verschiedenen Phasen innerhalb der Reinigungsmitteleinmalportion.

In einer weiteren Ausführungsform der vorliegenden Erfindung ist es bevorzugt, dass das Gewichtsverhältnis des Pulvers zur Gelphase (bzw. zur Summe/ zum Gesamtgewicht aller Gelphasen), von 20:1 bis 1:1, bevorzugt von 12:1 bis 1,5:1, insbesondere von 10:1 bis 2:1, ganz besonders bevorzugt von 8:1 bis 2,5:1 beträgt.

Die Gelphase umfasst mindestens einen Gelbildner. Bevorzugt umfasst die mindestens eine Gelphase wasserlösliches Polymer aus der Gruppe der ggf. acetalisierten Polyvinylalkohole (PVOH) sowie deren Copolymeren.

Als Copolymere der Polyvinylalkohol sind im Sinne der Erfindung bevorzugt Copolymere von Polyvinylalkohol mit anderen Monomeren, insbesondere Copolymer mit anionischen Monomeren. Als anionische Monomere sind bevorzugt geeignet Vinylessigsäure, Alkylacrylate, Maleinsäure und deren Derivate, insbesondere Monoalkylmaleate (insbesondere Monomethylmaleat), Dialkylmaleate (insbesondere Dimethylmaleat), Maleinsäureanhydrid, Fumarsäure und deren Derivate, insbesondere Monoalkylfumarat (insbesondere Monomethylfumarat), Dialkylfumarat (insbesondere Dimethylfumarat), Fumarsäureanhydrid, Itaconsäure und deren Derivate, insbesondere Monomethylitaconat, Dialkylitaconat, Dimethylitaconat, Itaconsäureanhydrid, Citraconsäure (Methylmaleinsäure) und deren Derivate, Monoalkylcitraconsäure (insbesondere Methylcitraconat), Dialkylcitraconsäure (Dimethylcitraconat), Citraconsäureanhydrid, Mesaconsäure (Methylfumarsäure) und deren Derivate, Monoalkylmesaconat, Dialkylmesaconat, Mesaconsäureanhydrid, Glutaconsäure und deren Derivate, Monoalkylglutaconat, Dialkylglutaconat, Glutaconsäureanhydrid, Vinylsulfonsäure, Alkylsulfonsäure, Ethylensulfonsäure, 2-Acrylamido-1-methylpropansulfonsäure, 2-acrylamido-2-methylpropansulfonsäure, 2-Methylacrylamido-2-methylpropansulfonsäure, 2-Sulfoethylacrylat sowie deren Kombinationen sowie die Alkalimetallsalze oder Ester der vorstehend genannten Monomere.

Besonders bevorzugt sind die Copolymere von PVOH ausgewählt aus Copolymeren von Polyvinylalkohol mit einem Monomer insbesondere ausgewählt aus der Gruppe der Monoalkylmaleate (insbesondere Monomethylmaleat), Dialkylmaleate (insbesondere Dimethylmaleat), Maleinsäureanhydrid, und deren Kombinationen, sowie die Alkalisalze oder Ester der vorstehend genannten Monomere. Für die geeigneten Molmassen gilt das für Polyvinylalkohole selbst angegebenen Werte,

Gemäß einer ganz besonders bevorzugten Ausführungsform umfasst die mindestens eine Gelphase Polyvinylalkohol und/oder ggf. aectalisierten Polyvinylalkohole, im weiteren als PVOH bezeichnet. Diese somit hergestellten Gelphasen sind besonders hochschmelzend, formstabil (auch bei 40 °C) und verändern ihre Form auch bei Lagerung nicht oder nur unwesentlich. Insbesondere sind sie auch wenig reaktiv im Hinblick auf eine direkte negative Wechselwirkung mit Bestandteilen des Pulvers. PVOH kann insbesondere auch ohne Schwierigkeiten wasserarme bzw. wasserfreie Gelphasen erzeugen. Bei der Verwendung von PVOH als Polymer für die mindestens eine Gelphase ergeben sich bei 110-120 °C dünnflüssige Schmelzen, die dadurch besonders leicht verarbeitet werden können, insbesondere kann das Einfüllen der Gelphase in die wasserlösliche Umhüllung schnell und genau vorgenommen werden, ohne dass ein Verkleben stattfindet oder die Menge ungenau dosiert wird. Des Weiteren haften diese Gelphasen besonders gut an der wasserlöslichen Umhüllung, insbesondere, wenn diese aus ebenfalls aus PVOH hergestellt ist. Dies ist optisch von Vorteil. Durch die schnelle Verfestigung der mindestens eine Gelphase mit PVOH kann die Weiterverarbeitung der Gelphasen besonders schnell erfolgen. Weiterhin ist die gute Löslichkeit der erzeugten Gelphasen für die Gesamtlöslichkeit des Reinigungsmittels besonders günstig.

Erfindungsgemäß umfasst die Gelphase PVOH in einem Anteil von etwa 5 Gew.-% bis 40 Gew.-%, insbesondere von 7 Gew.-% bis 35 Gew.-%, bevorzugt von 8,5 Gew.-% bis 25 Gew.-%. Deutlich geringere Anteile an PVOH, führen nicht zur Ausbildung von stabilen Gelphase. Die Werte sind jeweils bezogen auf das Gesamtgewicht der Gelphase(n).

Polyvinylalkohole sind thermoplastische Kunststoffe, die als weißes bis gelbliches Pulver meistens durch Hydrolyse von Polyvinylacetat hergestellt werden. Polyvinylalkohole (PVOH) sind beständig gegen fast alle wasserfreien organischen Lösemittel. Bevorzugt sind Polyvinylalkohole mit einer Molmasse von 30.000 bis 60.000 g/mol.

Im Rahmen der vorliegenden Erfindung ist es bevorzugt, dass die mindestens eine Gelphase Polyvinylalkohol umfasst, dessen Hydrolysegrad vorzugsweise 70 bis 100 Mol-%, insbesondere 80 bis 90 Mol-%, besonders bevorzugt 81 bis 89 Mol-% und vor allem 82 bis 88 Mol-% beträgt.

Bevorzugt sind Polyvinylalkohole, die als weiß-gelbliche Pulver oder Granulate mit Polymerisationsgraden im Bereich von ca. 100 bis 2500 (Molmassen von ca. 4000 bis 100.000 g/mol) und Hydrolysegraden von 80 bis 99 Mol%, bevorzugt von 80 bis 90 Mol%, insbesondere von 87 bis 89 Mol%, beispielsweise 88 Mol% aufweisen, die dementsprechend noch einen Restgehalt an Acetyl-Gruppen enthalten (acetalisierter Polyvinylalkohol).

PVOH Pulver, mit den vorstehend genannten Eigenschaften, welche zum Einsatz in der mindestens eine Gelphasen geeignet sind, werden beispielsweise unter der Bezeichnung Mowiol^{®} oder Poval^{®} von Kuraray vertrieben. Besonders geeignet sind die Poval^{®} Qualitäten, insbesondere die Qualitäten 3-83, 3-88 und bevorzugt 4-88 sowie Mowiol^{®} 4-88 von Kuraray.

Die Wasserlöslichkeit von Polyvinylalkohol kann durch Nachbehandlung mit Aldehyden (Acetalisierung) oder Ketonen (Ketalisierung) verändert werden. Als besonders bevorzugt und aufgrund ihrer ausgesprochen guten Kaltwasserlöslichkeit besonders vorteilhaft haben sich hierbei Polyvinylalkohole herausgestellt, die mit den Aldehyd- bzw. Ketogruppen von Sacchariden oder Polysacchariden oder Mischungen hiervon acetalisiert bzw. ketalisiert werden. Als äußerst vorteilhaft einzusetzen sind die Reaktionsprodukte aus Polyvinylalkohol und Stärke. Weiterhin lässt sich die Wasserlöslichkeit durch Komplexierung mit Ni- oder Cu-Salzen oder durch Behandlung mit Dichromaten, Borsäure, Borax verändern und so gezielt auf gewünschte Werte einstellen.

Erfindungsgemäß kann die mindestens eine Gelphase weiterhin anionische Polymere oder Copolymere mit Gerüststoffeigenschaften umfassen. Die im weiteren aufgeführten Polymere können, ggf. zusätzlich, auch in mindestens einer der anderen Phasen des Reinigungsmittels enthalten sein. Bevorzugt handelt es sich hierbei um ein Polycarboxylat. Als Polycarboxylat wird vorzugsweise ein copolymeres Polyacrylat, vorzugsweise ein Sulfopolymer vorzugsweise ein copolymeres Polysulfonat, vorzugsweise ein hydrophob modifiziertes copolymeres Polysulfonat eingesetzt. Die Copolymere können zwei, drei, vier oder mehr unterschiedliche Monomereinheiten aufweisen. Bevorzugte copolymere Polysulfonate enthalten neben Sulfonsäuregruppen-haltigem(n) Monomer(en) mindestens ein Monomer aus der Gruppe der ungesättigten Carbonsäuren.

Als ungesättigte Carbonsäure(n) wird/werden mit besonderem Vorzug ungesättigte Carbonsäuren der Formel R¹(R²)C=C(R³)COOH eingesetzt, in der R¹ bis R³ unabhängig voneinander für -H, -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH2, -OH oder -COOH substituierte Alkyl- oder Alkenylreste wie vorstehend definiert oder für -COOH oder -COOR⁴ steht, wobei R⁴ ein gesättigter oder ungesättigter, geradkettigter oder verzweigter Kohlenwasserstoffrest mit 1 bis 12 Kohlenstoffatomen ist.

Besonders bevorzugte ungesättigte Carbonsäuren sind Acrylsäure, Methacrylsäure, Ethacrylsäure, α-Chloroacrylsäure, α-Cyanoacrylsäure, Crotonsäure, α-Phenyl-Acrylsäure, Maleinsäure, Maleinsäureanhydrid, Fumarsäure, Itaconsäure, Citraconsäure, Methylenmalonsäure, Sorbinsäure, Zimtsäure oder deren Mischungen. Einsetzbar sind selbstverständlich auch die ungesättigten Dicarbonsäuren.

Bei den Sulfonsäuregruppen-haltigen Monomeren sind solche der Formel R⁵(R⁶)C=C(R⁷)-X-SO₃H bevorzugt, in der R⁵ bis R⁷ unabhängig voneinander für -H, -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit - NH₂, -OH oder -COOH substituierte Alkyl- oder Alkenylreste oder für -COOH oder -COOR⁴ steht, wobei R⁴ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂-, - C(O)-NH-C(CH₃)₂-CH₂- und -C(O)-NH-CH(CH₃)-CH₂-.

Unter diesen Monomeren bevorzugt sind solche der Formeln

H₂C=CH-X-SO₃H , H₂C=C(CH₃)-X-SO₃H oder HO₃S-X-(R⁶ )C=C(R⁷)-X-SO₃H,
in denen R⁶ und R⁷ unabhängig voneinander ausgewählt sind aus -H, -CH₃, -CH₂CH₃, - CH₂CH₂CH₃ und -CH(CH₃)₂ und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂-, - C(O)-NH-C(CH₃)₂-CH₂- und -C(O)-NH-CH(CH₃)-CH₂-.

Besonders bevorzugte Sulfonsäuregruppen-haltige Monomere sind dabei 1-Acrylamido-1-propansulfonsäure, 2-Acrylamido-2-propansulfonsäure, 2-Acrylamido-2-methyl-1-propansulfonsäure, 2-Methacrylamido-2-methyl-1-propansulfonsäure, 3-Methacrylamido-2-hydroxy-propansulfonsäure, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen1-sulfonsäure, Styrolsulfonsäure, Vinylsulfonsäure, 3-Sulfopropylacrylat, 3-Sulfopropylmethacrylat, Sulfomethacrylamid, Sulfomethylmethacrylamid sowie Mischungen der genannten Säuren oder deren wasserlösliche Salze. In den Polymeren können die Sulfonsäuregruppen ganz oder teilweise in neutralisierter Form vorliegen, das heißt dass das acide Wasserstoffatom der Sulfonsäuregruppe in einigen oder allen Sulfonsäuregruppen gegen Metallionen, vorzugsweise Alkalimetallionen und insbesondere gegen Natriumionen, ausgetauscht sein kann. Der Einsatz von teil- oder vollneutralisierten Sulfonsäuregruppen-haltigen Copolymeren ist erfindungsgemäß bevorzugt.

Die Monomerenverteilung der erfindungsgemäß bevorzugt eingesetzten Copolymere beträgt bei Copolymeren, die nur Carbonsäuregruppen-haltige Monomere und Sulfonsäuregruppen-haltige Monomere enthalten, vorzugsweise jeweils 5 bis 95 Gew.-%, besonders bevorzugt beträgt der Anteil des Sulfonsäuregruppen-haltigen Monomers 50 bis 90 Gew.-% und der Anteil des Carbonsäuregruppen-haltigen Monomers 10 bis 50 Gew.-%, die Monomere sind hierbei vorzugsweise ausgewählt aus den zuvor genannten. Die Molmasse der erfindungsgemäß bevorzugt eingesetzten Sulfo-Copolymere kann variiert werden, um die Eigenschaften der Polymere dem gewünschten Verwendungszweck anzupassen. Bevorzugte Reinigungsmittel sind dadurch gekennzeichnet, dass die Copolymere Molmassen von 2000 bis 200.000 g·mol⁻¹, vorzugsweise von 4000 bis 25.000 g·mol⁻¹ und insbesondere von 5000 bis 15.000 g·mol⁻¹ aufweisen.

In einer weiteren bevorzugten Ausführungsform umfassen die Copolymere neben Carboxylgruppen-haltigem Monomer und Sulfonsäuregruppen-haltigem Monomer weiterhin mindestens ein nichtionisches, vorzugsweise hydrophobes Monomer. Durch den Einsatz dieser hydrophob modifizierten Polymere konnte insbesondere die Klarspülleistung erfindungsgemäßer Geschirrspülmittel verbessert werden.

Besonders bevorzugt umfasst die mindestens eine Gelphase weiterhin ein anionisches Copolymer, wobei als anionisches Copolymer ein Copolymer, umfassend
i) Carbonsäuregruppen-haltige Monomere
ii) Sulfonsäuregruppen-haltige Monomere
iii) nichtionische Monomere, insbesondere hydrophobe Monomere
eingesetzt wird.

Als nichtionische Monomere werden vorzugsweise Monomere der allgemeinen Formel
R¹ (R ²)C=C(R ³)-X-R⁴ eingesetzt, in der R¹ bis R ³ unabhängig voneinander für -H, -CH₃ oder -C₂H₅ steht, X für eine optional vorhandene Spacergruppe steht, die ausgewählt ist aus -CH₂-, -C(O)O- und -C(O)-NH-, und R⁴ für einen geradkettigen oder verzweigten gesättigten Alkylrest mit 2 bis 22 Kohlenstoffatomen oder für einen ungesättigten, vorzugsweise aromatischen Rest mit 6 bis 22 Kohlenstoffatomen steht.

Besonders bevorzugte nichtionische Monomere sind Buten, Isobuten, Penten, 3-Methylbuten, 2- Methylbuten, Cyclopenten, Hexen, Hexen-1 , 2-Methlypenten-1 , 3-Methlypenten-1 , Cyclohexen, Methylcyclopenten, Cyclohepten, Methylcyclohexen, 2,4,4-Trimethylpenten-1, 2,4,4-Trimethylpenten-2,2,3-Dimethylhexen-1, 2,4-Diemthylhexen-1, 2,5-Dimethlyhexen-1, 3,5-Dimethylhexen-1, 4,4-Dimethylhexan-1, Ethylcyclohexyn, 1-Octen, α-Olefine mit 10 oder mehr Kohlenstoffatomen wie beispielsweise 1-Decen, 1-Dodecen, 1-Hexadecen, 1-Oktadecen und C₂₂-α-Olefin, 2-Styrol, α-Methylstyrol, 3-Methylstyrol, 4-Propylstryol, 4-Cyclohexylstyrol, 4-Dodecylstyrol, 2-Ethyl-4-Benzylstyrol, 1-Vinylnaphthalin, 2-Vinylnaphthalin, Acrylsäuremethylester, Acrylsäureethylester, Acrylsäurepropylester, Acrylsäurebutylester, Acrylsäurepentylester, Acrylsäurehexylester, Methacrylsäuremethylester, *N*-(Methyl)acrylamid, Acrylsäure-2-Ethylhexylester, Methacrylsäure-2-Ethylhexylester, *N*-(2-Ethylhexyl)acrylamid, Acrylsäureoctylester, Methacrylsäureoctylester, *N*-(Octyl)acrylamid, Acrylsäurelaurylester, Methacrylsäurelaurylester, *N*-(Lauryl)acrylamid, Acrylsäurestearylester, Methacrylsäurestearylester, *N*-(Stearyl)acrylamid, Acrylsäurebehenylester, Methacrylsäurebehenylester und *N-*(Behenyl)acrylamid oder deren Mischungen, insbesondere Acrylsäure, Ethylacrylat, 2-Acrylamido-2-methylpropansulfonsäure (AMPS) sowie deren Mischungen.

Erfindungsgemäß kann die mindestens eine Gelphase auch weitere Polymere enthalten.

Bevorzugt ist hierbei die Anwesenheit von Polyalkylenglykolen, insbesondere Polyethylenglykolen in der Gelphase.

Dabei sind insbesondere solche Polyethylenglykole mit einer mittleren Molmasse zwischen etwa 100 und 8000 geeignet. Besonders bevorzugt werden die vorstehend genannten Polyethylenglykole in Mengen von 1 bis 40 Gew.-%, bevorzugt 5 bis 35 Gew.-%, insbesondere von 10 bis 30 Gew.-%, beispielsweise 15 bis 25 bevorzugt jeweils bezogen auf das Gesamtgewicht der Gelphase eingesetzt.

Überaschenderweise hat sich gezeigt, dass auch PVOH zusammen mit anionischen Polymeren oder Copolymeren, insbesondere mit Sulfopolymeren, zur Ausbildung von Gelphasen mit unempfindlichen Oberflächen führt. Entsprechende Oberflächen können vom Endverbraucher berührt werden, ohne dass Material an den Händen haften bleibt. Auch in einer Verpackung findet kein Materialabtrag statt. Bevorzugt umfasst daher die Gelphase PVOH und ein anionisches Copolymer/Polymer. Der Anteil am anionischen Polymer beträgt vorzugsweise 1 Gew.-% bis 35 Gew.-%, insbesondere 3 Gew.-% bis 30 Gew.-%, besonders 4 Gew.-% bis 25 Gew.-%, bevorzugt 5 Gew.-% bis 20 Gew.-%, beispielsweise 10 Gew.-% bezogen auf das Gesamtgewicht der Gelphase. Sulfopolymere sorgen zudem für einen hervorragenden Glanz der Oberfläche. Zudem bleiben auch Fingerabdrücke nicht erhalten. Daher beträgt der Anteil an Sulfopolymeren, insbesondere an Sulfopolymeren mit AMPS als sulfonsäuregruppenhaltigem Monomer, beispielsweise Acusol 590, Acusol 588 oder Sokalan CP50, vorzugsweise 1 Gew.-% bis 25 Gew.-%, insbesondere 3 Gew.-% bis 15 Gew.-%, besonders 4 Gew.-% bis 12 Gew.-%, bevorzugt 5 Gew.-% bis 10 Gew.-% bezogen auf das Gewicht der Gelphase. In einer besonders bevorzugten Ausführungsform umfasst die mindestens eine Gelphase daher PVOH sowie ein Sulfopolymer und mindestens einen mehrwertigen Alkohol.

Eine ganz besonders bevorzugte Ausführungsform betrifft mindestens eine Gelphase bzw. Gelphasen, die Polyvinylalkohol als Polymer, wie vorstehend beschrieben, in Kombination mit Polyethylenglykolen enthält/enthalten. Besonders bevorzugt werden in Kombination mit Polyvinylalkohol Polyethylenglykole mit einer mittleren Molmasse zwischen etwa 100 und etwa 2000 g/mol, bevorzugt zwischen 200 und 1000 g/mol, insbesondere bevorzugt zwischen 300 und 800 g/mol, beispielsweise um 400 g/mol INCI: PEG400) eingesetzt.

Insbesondere ist es vorteilhaft, dass die mindestens eine Gelphase umfassend Polyvinylalkohol zusätzlich Polyethylenglykole mit einer mittleren Molmasse von etwa 300 bis 800 g/mol in Mengen von 10 bis 30 Gew.-% bezogen auf das Gesamtgewicht der mindestens eine Gelphase enthalten. Überraschenderweise hat sich gezeigt, dass die Zugabe von Polyethylenglykolen, insbesondere von solchen mit mittleren Molmassen bis zu 800 g/mol zu der mindestens eine Gelphase, zu einer Beschleunigung der Verfestigungszeit der Gelphasen führt. Dies ist insbesondere für die produktionstechnischen Abläufe von großem Vorteil, da die Weiterverarbeitung der Gelphasen im verfestigten Zustand viel schneller und damit in der Regel kostengünstiger erfolgen kann.

Besonders bevorzugt umfasst die mindestens eine Gelphase mindestens ein Alkantriol und/oder mindestens ein Alkandiol, bevorzugt mindestens ein C₃- bis C₆-Alkantriol und/oder mindestens ein C₃- bis C₅- Alkandiol als mehrwertigen Alkohol. Bevorzugt umfasst sie ein Alkantriol und ein Alkandiol als mindestens einen mehrwertigen Alkohol. Besonders bevorzugt ist eine Gelphase, die mindestens einen (ggf. acetalisiertes) PVOH, sowie ein C₃- bis C₅-Alkandiol und ein C₃- bis C₆- Alkantriol umfasst.

Überraschenderweise hat sich gezeigt, dass bei der Kombination eines entsprechenden Triols (Alkantriols) mit einem entsprechenden Diol (Alkandiol) besonders kurze Erstarrungszeit erreicht werden können. Die erhaltenen Gelphasen sind zudem transparent und weisen eine glänzende Oberfläche auf, die für einen ansprechenden optischen Eindruck des erfindungsgemäßen Reinigungsmittel s sorgen. Die Begriffe Diol und Alkandiol werden vorliegend synonym verwendet. Gleiches gilt für Triol und Alkantriol.

Die Menge an in erfindungsgemäßen Gelphasen eingesetzten Alkandiolen und/oder Alkantriolen liegt vorzugsweise bei mindestens 45 Gew.-%, insbesondere bei 55 Gew.-% oder mehr. Bevorzugte Mengenbereiche sind hierbei von 5 Gew.-% bis 75 Gew.-%, insbesondere von 10 Gew.-% bis 70 Gew.-%, bezogen auf das Gesamtgewicht der Gelphase.

Besonders bevorzugt ist das C₃- bis C₆-Alkantriol Glyzerin und/oder 2-Ethyl-2-(hydroxymethyl)-1,3-propandiol (auch 1,1,1-Trimethylolpropan genannt). Das C₃- bis C₅- Alkandiol ist vorzugsweise 1,3-Propandiol und/oder 1,2-Propandiol. Überraschenderweise hat sich gezeigt, dass die Kettenlänge des Diols sowie insbesondere die Stellung der OH-Gruppen Einfluss auf die Transparenz der Gelphase hat. Vorzugsweise sind daher die OH-Gruppen des Diols nicht an unmittelbar benachbarten C-Atomen angeordnet. Insbesondere befinden sich zwischen den beiden OH-Gruppen des Diols drei oder vier Kohlenstoffatome, insbesondere 3 Kohlenstoffatome. Besonders bevorzugt ist das Diol 1,3-Propandiol. Überraschenderweise hat sich gezeigt, dass mit Mischungen, welche Glyzerin und 1,3-Propandiol und/oder 1,2-Propandiol umfassen, besonders gute Ergebnisse erzielt werden.

Ist Glyzerin als Alkantriol in der Gelphase enthalten, so beträgt der Anteil an Glyzerin bezogen auf das Gesamtgewicht der Gelphase, bevorzugt 5 Gew.-% bis 70 Gew.-%, insbesondere 10 Gew.-% bis 65 Gew.-%, besonders 20 Gew.-% bis 40 Gew.-%.

Sind ggf. mehrere Alkandiole in der Gelphase enthalten, beträgt der Anteil an Alkandiolen, bezogen auf das Gesamtgewicht der Gelphase, bevorzugt 5 Gew.-% bis 70 Gew.-%, insbesondere 7 Gew.-% bis 65 Gew.-%, besonders 10 Gew.-% bis 40 Gew.-%.

Umfasst die Gelphase mindestens ein Alkandiol, insbesondere 1,3-Propandiol oder 1,2-Propandiol, so beträgt der Anteil an Alkandiol, insbesondere 1,3-Propandiol oder 1,2-Propandiol, bezogen auf das Gesamtgewicht der Gelphase, bevorzugt 5 Gew.-% bis 70 Gew.-%, insbesondere 10 Gew.-% bis 65 Gew.-%, besonders 20 Gew.-% bis 45 Gew.-%. Ist 1,3-Propandiol in der Gelphase enthalten, so beträgt der Anteil an 1,3-Propandiol, bezogen auf das Gesamtgewicht der Gelphase, insbesondere 10 Gew.-% bis 65 Gew.-%, besonders 20 Gew.-% bis 45 Gew.-%. Insbesondere bevorzugt ist eine Gelphase, die 20 bis 45 Gew.-% 1,3 Propandiol und/oder 1,2-Propandiol und 10 Gew.-% bis 65 Gew.-% Glyzerin, jeweils bezogen auf das Gesamtgewicht der Gelphase, enthält.

Es hat sich gezeigt, dass in diesen Bereichen eine rasche Erstarrung bei 20 °C einer Gelphase möglich ist, die erhaltenen Phasen lagerstabil und transparent sind. Insbesondere der Anteil an Glyzerin hat eine Auswirkung auf die Aushärtezeit.

Weist die erfindungsgemäße mindestens eine Gelphase ein C₃- bis C₆-Alkantriol und ein C₃- bis C₅- Alkandiol auf, so beträgt deren Gewichtsverhältnis vorzugsweise 3:1 bis 2:1. Insbesondere beträgt deren Gewichtsverhältnis 2:1, wenn Glyzerin und 1,3-Propandiol als mehrwertige Alkohole enthalten sind. Überraschenderweise hat sich gezeigt, dass bei diesen Gewichtsverhältnissen innerhalb kurzer Erstarrungszeiten bei 20° C von 10 Minuten oder weniger, lagerstabile, glänzende, transparente Gelphasen erhalten werden können.

Ganz besonders bevorzugte Ausführungsformen der vorliegenden Erfindung umfass die mindestens eine Gelphase Phase 8 bis 20 Gew.-% PVOH, 15 bis 30 Gew.-% 1,3-Propandiol, 30 bis 40 Gew.-% Glycerin, 5 bis 15 Gew.-% Sulfonsäuregruppenhaltiges Polyacrylat-Copolymer, sowie 2- 15 Gew.-% Polyethylenglykol (bevorzugt mit einer mittleren Molmasse von 200-600 g/mol), Gew.-% jeweils bezogen auf das Gesamtgewicht der Gelphase.

Das erfindungsgemäße Reinigungsmittel umfasst vorzugsweise mindestens ein Tensid. Dieses Tensid ist ausgewählt aus der Gruppe der anionischen, nichtionischen und kationischen Tenside. Das erfindungsgemäße Reinigungsmittel kann auch Mischungen aus mehreren Tensiden, die aus derselben Gruppe ausgewählt sind, enthalten.

Erfindungsgemäß umfassen das Pulver, der Formkörper und/oder ggf. die Gelphase(n) jeweils mindestens ein Tensid. Es ist jedoch auch möglich, dass nur die Pulverphase, die Gelphase oder der Formkörper mindestens ein Tensid umfassen. Umfassen mindestens zwei Phasen (Pulver, Formkörper und/oder Gelphase(n)) ein Tensid, so handelt es sich vorzugsweise um voneinander verschiedene Tenside. Es ist jedoch auch möglich, dass Pulverphase, Formkörper und/oder Gelphase dasselbe Tensid oder dieselben Tenside aufweisen. Erfindungsgemäß enthalten das mindestens ein Pulver und/oder mindestens eine Gelphase enthalten vorzugsweise mindestens ein nichtionisches Tensid. Als nichtionische Tenside können alle dem Fachmann bekannten nichtionischen Tenside eingesetzt werden. Bevorzugt werden schwachschäumende nichtionische Tenside eingesetzt, insbesondere alkoxylierte, vor allem ethoxylierte, schwachschäumende nichtionische Tenside. Diese werden im Folgenden näher spezifiziert.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Mit besonderem Vorzug enthalten die erfindungsgemäßen Reinigungsmittel, insbesondere Reinigungsmittel für das maschinelle Geschirrspülen, nichtionische Tenside aus der Gruppe der alkoxylierten Alkohole. Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann beziehungsweise lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispielaus Kokos-, Palm-, Talgfett- oder Oleylalkohol, und durchschnittlich 2 bis 8 Mol EO pro Mol Alkohol bevorzugt. Zu den bevorzugten ethoxylierten Alkoholen gehören beispielsweise C₁₂₋₁₄-Alkohole mit 3 EO oder 4 EO, C₈₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 5 EO.

Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Mit besonderem Vorzug werden ethoxylierte Niotenside, die aus C₆₋₂₀-Monohydroxyalkanolen oder C₆₋₂₀-Alkylphenolen oder C₁₆₋₂₀-Fettalkoholen und mehr als 12 Mol, vorzugsweise mehr als 15 Mol und insbesondere mehr als 20 Mol Ethylenoxid pro Mol Alkohol gewonnen wurden, eingesetzt. Ein besonders bevorzugtes Niotensid wird aus einem geradkettigen Fettalkohol mit 16 bis 20 Kohlenstoffatomen (C₁₆₋₂₀-Alkohol), vorzugsweise einem C₁₈-Alkohol und mindestens 12 Mol, vorzugsweise mindestens 15 Mol und insbesondere mindestens 20 Mol Ethylenoxid gewonnen. Hierunter sind die sogenannten "narrow range ethoxylates" besonders bevorzugt.

Bevorzugt einzusetzende Tenside stammen aus den Gruppen der alkoxylierten Niotenside, insbesondere der ethoxylierten primären Alkohole und Mischungen dieser Tenside mit strukturell komplizierter aufgebauten Tensiden wie Polyoxypropylen/Polyoxyethylen/Polyoxypropylen ((PO/EO/PO)-Tenside). Solche (PO/EO/PO)-Niotenside zeichnen sich darüber hinaus durch gute Schaumkontrolle aus.

Als besonders bevorzugte Niotenside haben sich im Rahmen der vorliegenden Erfindung für die schwachschäumende Niotenside erwiesen, welche alternierende Ethylenoxid- und Alkylenoxideinheiten aufweisen. Unter diesen sind wiederum Tenside mit EO-AO-EO-AO-Blöcken bevorzugt, wobei jeweils eine bis zehn EO- beziehungsweise AO-Gruppen aneinander gebunden sind, bevor ein Block aus den jeweils anderen Gruppen folgt. Hier sind nichtionisches Tenside der allgemeinen Formel 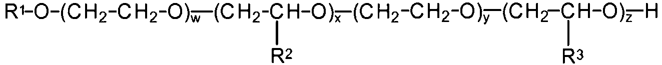 bevorzugt, in der R¹ für einen geradkettigen oder verzweigten, gesättigten oder einbeziehungsweise mehrfach ungesättigten C₆₋₂₄-Alkyl- oder -Alkenylrest steht; jede Gruppe R² beziehungsweise R³ unabhängig voneinander ausgewählt ist aus -CH₃, -CH₂CH₃, -CH₂CH₂-CH₃, -CH(CH₃)₂ und die Indizes w, x, y, z unabhängig voneinander für ganze Zahlen von 1 bis 6 stehen.

Bevorzugte Niotenside der vorstehenden Formel lassen sich durch bekannte Methoden aus den entsprechenden Alkoholen R¹-OH und Ethylen- beziehungsweise Alkylenoxid herstellen. Der Rest R¹ in der vorstehenden Formel kann je nach Herkunft des Alkohols variieren. Werden native Quellen genutzt, weist der Rest R¹ eine gerade Anzahl von Kohlenstoffatomen auf und ist in der Regel unverzweigt, wobei die linearen Reste aus Alkoholen nativen Ursprungs mit 12 bis 18 C-Atomen, zum Beispielaus Kokos-, Palm-, Talgfett- oder Oleylalkohol, bevorzugt sind. Aus synthetischen Quellen zugängliche Alkohole sind beispielsweise die Guerbetalkohole oder in 2-Stellung methylverzweigte beziehungsweise lineare und methylverzweigte Reste im Gemisch, so wie sie üblicherweise in Oxoalkoholresten vorliegen. Unabhängig von der Art des zur Herstellung der in den Mitteln enthaltenen Niotenside eingesetzten Alkohols sind Niotenside bevorzugt, bei denen R¹ in der vorstehenden Formel für einen Alkylrest mit 6 bis 24, vorzugsweise 8 bis 20, besonders bevorzugt 9 bis 15 und insbesondere 9 bis 11 Kohlenstoffatomen steht.

Als Alkylenoxideinheit, die alternierend zur Ethylenoxideinheit in den bevorzugten Niotensiden enthalten ist, kommt neben Propylenoxid insbesondere Butylenoxid in Betracht. Aber auch weitere Alkylenoxide, bei denen R² beziehungsweise R³ unabhängig voneinander ausgewählt sind aus -CH₂CH₂-CH₃ beziehungsweise -CH(CH₃)₂ sind geeignet. Bevorzugt werden Niotenside der vorstehenden Formel eingesetzt, bei denen R² beziehungsweise R³ für einen Rest -CH₃, w und x unabhängig voneinander für Werte von 3 oder 4 und y und z unabhängig voneinander für Werte von 1 oder 2 stehen.

Weitere bevorzugt eingesetzte nichtionische Tenside sind nichtionische Tenside der allgemeinen Formel R¹O(AlkO)ₓM(OAlk)_{y}OR², wobei
R¹ und R² unabhängig voneinander für einen verzweigten oder unverzweigten, gesättigten oder ungesättigten, gegebenenfalls hydroxylierten Alkylrest mit 4 bis 22 Kohlenstoffatomen stehen; Alk für einen verzweigten oder unverzweigten Alkylrest mit 2 bis 4 Kohlenstoffatomen steht; x und y unabhängig voneinander für Werte zwischen 1 und 70 stehen; und M für einen Alkylrest aus der Gruppe CH₂, CHR³, CR³R⁴, CH₂CHR³ und CHR³CHR⁴ steht, wobei R³ und R⁴ unabhängig voneinander für einen verzweigten oder unverzweigten, gesättigten oder ungesättigten Alkylrest mit 1 bis 18 Kohlenstoffatomen stehen.

Bevorzugt sind hierbei nichtionische Tenside der allgemeinen Formel

R¹-CH(OH)CH₂-O(CH₂CH₂O)ₓCH₂CHR(OCH₂CH₂)_{y}-CH₂CH(OH)-R²,

wobei R, R¹ und R² unabhängig voneinander für einen Alkylrest oder Alkenylrest mit 6 bis 22 Kohlenstoffatomen; x und y unabhängig voneinander für Werte zwischen 1 und 40 stehen.

Bevorzugt sind hierbei insbesondere Verbindungen der allgemeinen Formel

R¹-CH(OH)CH₂-O(CH₂CH₂O)ₓCH₂CHR(OCH₂CH₂)_{y}O-CH₂CH(OH)-R²,

in denen R für einen linearen, gesättigten Alkylrest mit 8 bis 16 Kohlenstoffatomen, vorzugsweise 10 bis 14 Kohlenstoffatomen steht und n und m unabhängig voneinander Werte von 20 bis 30 aufweisen. Entsprechende Verbindungen können beispielsweise durch Umsetzung von Alkyldiolen HO-CHR-CH₂-OH mit Ethylenoxid erhalten werden, wobei im Anschluss eine Umsetzung mit einem Alkylepoxid zum Verschluss der freien OH-Funktionen unter Ausbildung eines Dihydroxyethers erfolgt.

Bevorzugte nichtionische Tenside sind hierbei solche der allgemeinen Formel R¹-CH(OH)CH₂O- (AO)_{w}-(AO)ₓ-(A"O)_{y}-(A‴O)_{z}-R², in der
- R¹ für einen geradkettigen oder verzweigten, gesättigten oder ein- bzw. mehrfach ungesättigten C₆₋₂₄-Alkyl- oder -Alkenylrest steht;
- R² für Wasserstoff oder einen linearen oder verzweigten Kohlenwasserstoffrest mit 2 bis 26 Kohlenstoffatomen steht;
- A, A', A" und A‴ unabhängig voneinander für einen Rest aus der Gruppe -CH₂CH₂, -CH₂CH₂-CH₂, -CH₂-CH(CH₃), -CH₂-CH₂-CH₂-CH₂, -CH₂-CH(CH₃)-CH₂-, -CH₂-CH(CH₂-CH₃) stehen,
- w, x, y und z für Werte zwischen 0,5 und 120 stehen, wobei x, y und/oder z auch 0 sein können.

Durch den Zusatz der vorgenannten nichtionischen Tenside der allgemeinen Formel
R¹-CH(OH)CH₂O-(AO)_{w}-(A'O)ₓ-(A"0)_{y}-(A‴O)_{z}-R², nachfolgend auch als "Hydroxymischether" bezeichnet, kann überraschenderweise die Reinigungsleistung erfindungsgemäßer Zubereitungen deutlich verbessert werden und zwar sowohl im Vergleich zu Tensid-freien System wie auch im Vergleich zu Systemen, die alternative nichtionischen Tenside, beispielsweise aus der Gruppe der polyalkoxylierten Fettalkohole enthalten.

Bevorzugt sind insbesondere solche endgruppenverschlossenen poly(oxyalkylierten) Niotenside, die, gemäß der folgenden Formel 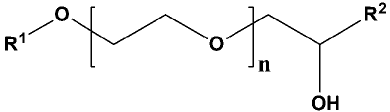 neben einem Rest R¹, welcher für lineare oder verzweigte, gesättigte oder ungesättigte, aliphatische oder aromatische Kohlenwasserstoffreste mit 2 bis 30 Kohlenstoffatomen, vorzugsweise mit 4 bis 22 Kohlenstoffatomen steht, weiterhin einen linearen oder verzweigten, gesättigten oder ungesättigten, aliphatischen oder aromatischen Kohlenwasserstoffrest R² mit 1 bis 30 Kohlenstoffatomen aufweisen, wobei n für Werte zwischen 1 und 90, vorzugsweise für Werte zwischen 10 und 80 und insbesondere für Werte zwischen 20 und 60 steht. Insbesondere bevorzugt sind Tenside der vorstehenden Formel, in denen R¹ für C₇ bis C₁₃, n für eine ganze natürliche Zahl von 16 bis 28 und R²für C₈ bis C₁₂ steht.

Besonders bevorzugt sind Tenside der Formel

R¹O[CH₂CH(CH₃)O]ₓ[CH₂CH₂O]_{y}CH₂CH(OH)R²,

in der R¹ für einen linearen oder verzweigten aliphatischen Kohlenwasserstoffrest mit 4 bis 18 Kohlenstoffatomen oder Mischungen hieraus steht, R²einen linearen oder verzweigten Kohlenwasserstoffrest mit 2 bis 26 Kohlenstoffatomen oder Mischungen hieraus bezeichnet und x für Werte zwischen 0,5 und 1,5 sowie y für einen Wert von mindestens 15 steht. Zur Gruppe dieser nichtionischen Tenside zählen beispielsweise die C₂₋₂₆ Fettalkohol-(PO)₁-(EO)₁₅₋₄₀-2-hydroxyalkylether, insbesondere auch die C₈₋₁₀ Fettalkohol-(PO)₁-(EO)₂₂-2-hydroxydecylether.

Besonders bevorzugt sind weiterhin solche endgruppenverschlossenen poly(oxyalkylierten) Niotenside der Formel R¹O[CH₂CH₂O]ₓ[CH₂CH(R³)O]_{y}CH₂CH(OH)R²,
in der R¹ und R² unabhängig voneinander für einen linearen oder verzweigten, gesättigten oder ein- bzw. mehrfach ungesättigten Kohlenwasserstoffrest mit 2 bis 26 Kohlenstoffatomen steht, R³ unabhängig voneinander ausgewählt ist aus -CH₃, -CH₂CH₃, -CH₂CH₂-CH 3, -CH(CH₃)₂, vorzugsweise jedoch für -CH₃steht, und x und y unabhängig voneinander für Werte zwischen 1 und 32 stehen, wobei Niotenside mit R³= -CH₃und Werten für x von 15 bis 32 und y von 0,5 und 1,5 ganz besonders bevorzugt sind.

Weitere bevorzugt einsetzbare Niotenside sind die endgruppenverschlossenen poly(oxyalkylierten) Niotenside der Formel R¹O[CH₂CH(R³)O]ₓ[CH₂]ₖCH(OH)[CH₂]ⱼOR²,
in der R¹ und R² für lineare oder verzweigte, gesättigte oder ungesättigte, aliphatische oder aromatische Kohlenwasserstoffreste mit 1 bis 30 Kohlenstoffatomen stehen, R³ für H oder einen Methyl-, Ethyl-, n-Propyl-, iso-Propyl-, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen. Wenn der Wert x > 2 ist, kann jedes R³ in der oben stehenden Formel R¹O[CH₂CH(R³)O]ₓ[CH₂]ₖCH(OH)[CH₂]ⱼOR² unterschiedlich sein. R¹ und R² sind vorzugsweise lineare oder verzweigte, gesättigte oder ungesättigte, aliphatische oder aromatische Kohlenwasserstoffreste mit 6 bis 22 Kohlenstoffatomen, wobei Reste mit 8 bis 18 C-Atomen besonders bevorzugt sind. Für den Rest R³ sind H, -CH₃ oder -CH₂CH₃ besonders bevorzugt. Besonders bevorzugte Werte für x liegen im Bereich von 1 bis 20, insbesondere von 6 bis 15.

Wie vorstehend beschrieben, kann jedes R³ in der oben stehenden Formel unterschiedlich sein, falls x > 2 ist. Hierdurch kann die Alkylenoxideinheit in der eckigen Klammer variiert werden. Steht x beispielsweise für 3, kann der Rest R³ ausgewählt werden, um Ethylenoxid- (R³= H) oder Propylenoxid- (R³= CH₃) Einheiten zu bilden, die in jedweder Reihenfolge aneinandergefügt sein können, beispielsweise (EO)(PO)(EO), (EO)(EO)(PO), (EO)(EO)(EO), (PO)(EO)(PO),

(PO)(PO)(EO) und (PO)(PO)(PO). Der Wert 3 für x ist hierbei beispielhaft gewählt worden und kann durchaus größer sein, wobei die Variationsbreite mit steigenden x-Werten zunimmt und beispielsweise eine große Anzahl (EO)-Gruppen, kombiniert mit einer geringen Anzahl (PO)-Gruppen einschließt, oder umgekehrt.

Besonders bevorzugte endgruppenverschlossene poly(oxyalkylierte) Alkohole der oben stehenden Formel weisen Werte von k = 1 und j = 1 auf, so dass sich die vorstehende Formel zu R¹O[CH₂CH(R³)O]ₓCH₂CH(OH)CH₂OR² vereinfacht. In der letztgenannten Formel sind R¹, R² und R³ wie oben definiert und x steht für Zahlen von 1 bis 30, vorzugsweise von 1 bis 20 und insbesondere von 6 bis 18. Besonders bevorzugt sind Tenside, bei denen die Reste R¹ und R² 9 bis 14 C-Atome aufweisen, R³ für H steht und x Werte von 6 bis 15 annimmt. Als besonders wirkungsvoll haben sich schließlich die nichtionischen Tenside der allgemeine Formel R¹-CH(OH)CH₂O-(AO)_{w}-R² erwiesen, in der
- R¹ für einen geradkettigen oder verzweigten, gesättigten oder ein- bzw. mehrfach ungesättigten C 6-24-Alkyl- oder -Alkenylrest steht;
- R² für einen linearen oder verzweigten Kohlenwasserstoffrest mit 2 bis 26 Kohlenstoffatomen steht;
- A für einen Rest aus der Gruppe CH₂CH₂, CH₂CH₂CH₂, CH₂CH(CH₃), vorzugsweise für CH₂CH₂ steht, und
- w für Werte zwischen 1 und 120, vorzugsweise 10 bis 80, insbesondere 20 bis 40 steht.

Zur Gruppe dieser nichtionischen Tenside zählen beispielsweise die C₄₋₂₂ Fettalkohol-(EO)₁₀₋₈₀-2- hydroxyalkylether, insbesondere auch die C₈₋₁₂ Fettalkohol-(EO)₂₂-2-hydroxydecylether und die C₄₋₂₂ Fettalkohol-(EO)₄₀₋₈₀-2-hydroxyalkylether.

Bevorzugt enthält die mindestens eine erste und/oder die mindestens eine Gelphase mindestens ein nichtionisches Tensid, vorzugsweise ein nichtionisches Tensid aus der Gruppe der Hydroxymischether, wobei der Gewichtsanteil des nichtionischen Tensids am Gesamtgewicht der Gelphase vorzugsweise 0,5 Gew.-% bis 30 Gew.-%, bevorzugt 5 Gew.-% bis 25 Gew.-% und insbesondere 10 Gew.-% bis 20 Gew.-% beträgt.

In einer weiteren bevorzugten Ausführungsform ist das nichtionische Tensid der ersten und/oder Gelphase ausgewählt aus nichtionischen Tensiden der allgemeinen Formel
R¹-O(CH₂CH₂O)ₓCR³R⁴(OCH₂CH₂)_{y}O-R², in der R¹ und R² unabhängig voneinander für einen Alkylrest oder Alkenylrest mit 4 bis 22 Kohlenstoffatomen; R³ und R⁴ unabhängig voneinander für H oder für einen Alkylrest oder Alkenylrest mit 1 bis 18 Kohlenstoffatomen und x und y unabhängig voneinander für Werte zwischen 1 und 40 stehen.

Bevorzugt sind hierbei insbesondere Verbindungen der allgemeinen Formel
R¹-O(CH₂CH₂O)ₓCR³R⁴(OCH₂CH₂)_{y}O-R², in der R³ und R⁴ für H stehen und die Indices x und y unabhängig voneinander Werte von 1 bis 40, vorzugsweise von 1 bis 15 annehmen.

Besonders bevorzugt sind insbesondere Verbindungen der allgemeinen Formel
R¹-O(CH₂CH₂O)ₓCR³R⁴(OCH₂CH₂)_{y}O-R², in der die Reste R¹ und R² unabhängig voneinander gesättigte Alkylreste mit 4 bis 14 Kohlenstoffatome darstellen und die Indices x und y unabhängig voneinander Werte von 1 bis 15 und insbesondere von 1 bis 12 annehmen.

Weiterhin bevorzugt sind solche Verbindungen der allgemeinen Formel
R¹-O(CH₂CH₂O)ₓCR³R⁴(OCH₂CH₂)_{y}O-R², in der einer der Reste R¹ und R² verzweigt ist.

Ganz besonders bevorzugt sind Verbindungen der allgemeinen Formel
R¹-O(CH₂CH₂O)ₓCR³R⁴(OCH₂CH₂)_{y}O-R², in der die Indices x und y unabhängig voneinander Werte von 8 bis 12 annehmen.

Die angegebenen C-Kettenlängen sowie Ethoxylierungsgrade beziehungsweise Alkoxylierungsgrade der Niotenside stellen statistische Mittelwerte dar, die für ein spezielles Produkt eine ganze oder eine gebrochene Zahl sein können. Aufgrund der Herstellverfahren bestehen Handelsprodukte der genannten Formeln zumeist nicht aus einem individuellen Vertreter, sondern aus Gemischen, wodurch sich sowohl für die C-Kettenlängen als auch für die Ethoxylierungsgrade beziehungsweise Alkoxylierungsgrade Mittelwerte und daraus folgend gebrochene Zahlen ergeben können.

Selbstverständlich können die vorgenannten nichtionischen Tenside (Niotenside) nicht nur als Einzelsubstanzen, sondern auch als Tensidgemische aus zwei, drei, vier oder mehr Tensiden eingesetzt werden.

Insbesondere bevorzugt sind solche nichtionischen Tenside, die einen Schmelzpunkt oberhalb Raumtemperatur aufweisen. Nichtionische(s) Tensid(e) mit einem Schmelzpunkt oberhalb von 20°C, vorzugsweise oberhalb von 25°C, besonders bevorzugt zwischen 25 und 60°C und insbesondere zwischen 26,6 und 43,3°C, ist/sind besonders bevorzugt.

Geeignete nichtionische Tenside, die Schmelz- beziehungsweise Erweichungspunkte im genannten Temperaturbereich aufweisen, sind beispielsweise schwachschäumende nichtionische Tenside, die bei Raumtemperatur fest oder hochviskos sein können. Werden Niotenside eingesetzt, die bei Raumtemperatur hochviskos sind, so ist bevorzugt, dass diese eine Viskosität oberhalb von 20 Pa·s, vorzugsweise oberhalb von 35 Pa·s und insbesondere oberhalb 40 Pa·s aufweisen. Auch Niotenside, die bei Raumtemperatur wachsartige Konsistenz besitzen, sind bevorzugt.

Das bei Raumtemperatur feste Niotensid besitzt vorzugsweise Propylenoxideinheiten (PO) im Molekül. Vorzugsweise machen solche PO-Einheiten bis zu 25 Gew.-%, besonders bevorzugt bis zu 20 Gew.-% und insbesondere bis zu 15 Gew.-% der gesamten Molmasse des nichtionischen Tensids aus. Besonders bevorzugte nichtionische Tenside sind ethoxylierte Monohydroxyalkanole oder Alkylphenole, die zusätzlich Polyoxyethylen-Polyoxypropylen Blockcopolymereinheiten aufweisen. Der Alkohol- beziehungsweise Alkylphenolteil solcher Niotensidmoleküle macht dabei vorzugsweise mehr als 30 Gew.-%, besonders bevorzugt mehr als 50 Gew.-% und insbesondere mehr als 70 Gew.-% der gesamten Molmasse solcher Niotenside aus. Bevorzugte Mittel sind dadurch gekennzeichnet, dass sie ethoxylierte und propoxylierte Niotenside enthalten, bei denen die Propylenoxideinheiten im Molekül bis zu 25 Gew.-%, bevorzugt bis zu 20 Gew.-% und insbesondere bis zu 15 Gew.-% der gesamten Molmasse des nichtionischen Tensids ausmachen.

Weitere besonders bevorzugt einzusetzende Niotenside mit Schmelzpunkten oberhalb Raumtemperatur enthalten 40 bis 70% eines Polyoxypropylen/Polyoxyethylen/Polyoxypropylen-Blockpolymerblends, der 75 Gew.-% eines umgekehrten Block-Copolymers von Polyoxyethylen und Polyoxypropylen mit 17 Mol Ethylenoxid und 44 Mol Propylenoxid und 25 Gew.-% eines Block-Copolymers von Polyoxyethylen und Polyoxypropylen, initiiert mit Trimethylolpropan und enthaltend 24 Mol Ethylenoxid und 99 Mol Propylenoxid pro Mol Trimethylolpropan, enthält.

Der Gewichtsanteil des nichtionischen Tensids am Gesamtgewicht der Reinigungsmitteleinmalportion beträgt in einer bevorzugten Ausführungsform von 0,1 bis 20 Gew.-%, besonders bevorzugt von 0,5 bis 15 Gew.-%, insbesondere von 1,5 bis 10 Gew.-%.

Als anionische Tenside eignen sich in den Geschirrspülmitteln alle anionischen oberflächenaktiven Stoffe. Diese sind gekennzeichnet durch eine wasserlöslich machende, anionische Gruppe wie z. B. eine Carboxylat-, Sulfat-, Sulfonat- oder Phosphat-Gruppe und eine lipophile Alkylgruppe mit etwa 8 bis 30 C-Atomen. Zusätzlich können im Molekül Glykol- oder Polyglykolether-Gruppen, Ester-, Ether- und Amidgruppen sowie Hydroxylgruppen enthalten sein. Geeignete anionische Tenside liegen vorzugsweise in Form der Natrium-, Kalium- und Ammoniumsowie der Mono-, Di- und Trialkanolammoniumsalze mit 2 bis 4 C-Atomen in der Alkanolgruppe vor, aber auch Zink, Mangan(II), Magnesium, Calcium oder Mischungen hieraus können als Gegenionen dienen.

Bevorzugte anionische Tenside sind Alkylsulfate, Alkylpolyglykolethersulfate und Ethercarbonsäuren mit 10 bis 18 C-Atomen in der Alkylgruppe und bis zu 12 Glykolethergruppen im Molekül.

An Stelle der genannten Tenside oder in Verbindung mit ihnen können auch kationische und/oder amphotere Tenside, wie Betaine oder quartäre Ammoniumverbindungen, eingesetzt werden. Es ist allerdings bevorzugt, dass keine kationischen und/oder amphoteren Tenside eingesetzt werden.

Bevorzugte erfindungsgemäße Reinigungsmittel sind weiterhin dadurch gekennzeichnet, dass sie in der mindestens einen Pulverphase, dem mindestens einen Formkörper und/oder der mindestens eine Gelphase, insbesondere in der Pulverphase, ganz besonders bevorzugt im gesamten Reinigungsmittel weniger als 5,0 Gew.-% anionisches Tensid enthalten, da der Zusatz anionischer Tenside sich im Hinblick auf die Phaseneigenschaften, insbesondere deren Härte, Friabilität (Abriebverhalten) und Nachhärteverhalten als nachteilig erwiesen hat.

Stoffe, die auch als Inhaltsstoffe von kosmetischen Mitteln dienen, werden nachfolgend gegebenenfalls gemäß der International Nomenclature Cosmetic Ingredient (INCI) Nomenklatur bezeichnet. Chemische Verbindungen tragen eine INCI Bezeichnung in englischer Sprache. Die INCI Bezeichnung sind dem "International Cosmetic Ingredient Dictionary and Handbook, 7th Edition (1997)" zu entnehmen, das von The Cosmetic, Toiletry and Fragrance Association (CTFA), Washington D.C. (USA) herausgegeben wird. Die Angabe CAS bedeutet, dass es sich bei der nachfolgenden Zahlenfolge um eine Bezeichnung des Chemical Abstracts Service handelt.

Die erfindungsgemäßen Reinigungsmittel enthalten die dem Fachmann bekannten Inhaltsstoffe, insbesondere solche für maschinelle Geschirrspülmittel, wie Buildersubstanzen, Bleichmittel, Bleichaktivatoren, Bleichkatalysatoren, Enzyme, insbesondere Proteasen und/oder Amylasen, sowie Dispergierpolymere. Darüber hinaus können pH-Stellmittel, Glaskorrosionsinhibitoren, weitere Lösungsmittel, Verdicker, Sequestrierungsmittel, Elektrolyte, Korrosionsinhibitoren, insbesondere Silberschutzmittel, Glaskorrosionsinhibitoren, Schauminhibitoren, Farbstoffe, Duftstoffe (insbesondere in dem Pulver), Additive zur Verbesserung des Ablauf- und Trocknungsverhaltens, Konservierungsmittel, antimikrobielle Wirkstoffe (Desinfektionsmittel) in Mengen von üblicherweise nicht mehr als 5 Gew.-% enthalten sein.

Das erfindungsgemäße Reinigungsmittel umfasst mindestens ein Pulver und mindestens eine Gelphase. Das Reinigungsmittel kann eine, zwei, drei oder mehr voneinander verschiedene Pulver, die als getrennte Phasen vorliegen aufweisen; ebenso kann es eine, zwei, drei oder mehr voneinander getrennt vorliegende, gleiche oder hinsichtlich Farbe, Form und/oder chemischer Zusammensetzung unterscheidbare Gelphasen aufweisen. Besonders bevorzugt umfasst das Reinigungsmittel einen Formkörper, ein Pulver und mindestens zwei Gelphasen. Weiterhin bevorzugt ist eine Ausführungsform, in der die Reinigungsmitteleinmalportion ein Pulver, einen Formkörper und drei oder vier Gelphasen umfasst.

Erfindungsgemäß grenzen die mindestens ein Pulver und die mindestens eine Gelphase voll- oder teilflächig aneinander. Dabei ist es bevorzugt, dass die beiden Phasen unmittelbar aneinandergrenzen. Grenzen das mindestens ein Pulver und die mindestens eine Gelphase unmittelbar voll- oder teilflächig aneinander, ist die Stabilität neben einer möglichst kurzen Erstarrungszeit der mindestens eine Gelphase wichtig. Stabilität bedeutet hier, dass in der Gelphase enthaltende Bestandteile nicht in die mindestens ein Pulverübertreten, sondern auch nach einer längeren Lagerung die Pulver und die mindestens eine Gelphase optisch getrennt voneinander vorliegen und nicht miteinander in Wechselwirkung treten, wie z.B. Diffusion flüssiger Bestandteile von einer in die andere Phase oder Reaktion von Bestandteilen einer Phase mit denen in der anderen Phase. Überraschenderweise hat sich gezeigt, dass dies durch eine Gelphase, welche Glyzerin, mindestens ein C₃- bis C₅-Alkandiol, oder Glyzerin, PVOH und mindestens ein C₃- bis C₅-Alkandiol aufweist, ermöglicht werden kann.

In einer besonders bevorzugten Ausführungsform umfasst die erfindungsgemäße Reinigungsmitteleinmalportion in der Aufnahmekammer, umfassend die erfindungsgemäße Reinigungsmittelzusammensetzung, umfassend mindestens ein Pulver, mindestens einen vom Pulver verschiedenen Formkörper sowie mindestens eine Gelphase, keine Phasen, die bei 20 °C, 1 bar flüssig sind. Die vorhandenen Phasen (Pulver, Formkörper und Gelphase(n)) sind bei 20 °C, 1 bar fest, um eine Vermischung und/oder Auflösung einzelner Aktivstoffe und/oder Phasen zu vermeiden sowie die von der vorliegenden Erfindung verwirklichten Vorteile entstehen zu lassen. Sollten tatsächlich flüssige Phasen gewünscht sein, müssen diese in anderen Kammern der Reinigungsmitteleinmalportion untergebracht sein.

Ein weiterer Gegenstand der vorliegenden Anmeldung ist ein Verfahren zur Reinigung von harten Oberflächen, insbesondere von Geschirr, in dem die Oberfläche in an sich bekannter Weise unter Verwendung eines erfindungsgemäßen Reinigungsmittels bearbeitet wird. Insbesondere wird dabei die Oberfläche mit dem erfindungsgemäßen Reinigungsmittel in Kontakt gebracht. Die Reinigung erfolgt dabei insbesondere mit einer Reinigungsmaschine, bevorzugt mit einer Geschirrspülmaschine.

Ein weiterer Gegenstand der vorliegenden Erfindung ist ebenso die Verwendung eines Reinigungsmittels zur Reinigung von harten Oberflächen, insbesondere von Geschirr, insbesondere in maschinellen Geschirrspülmaschinen.

Die vorliegende Anmeldung hat in einer bevorzugten Ausführungsform maschinelle Geschirrspülmittel zum Gegenstand. Als maschinelle Geschirrspülmittel werden nach Maßgabe dieser Anmeldung Zusammensetzungen bezeichnet, die zur Reinigung verschmutzten Geschirrs in einem maschinellen Geschirrspülverfahren eingesetzt werden können. Damit unterscheiden sich die erfindungsgemäßen maschinellen Geschirrspülmittel beispielsweise von den maschinellen Klarspülmitteln, die stets in Kombination mit maschinellen Geschirrspülmitteln eingesetzt werden und keine eigene Reinigungswirkung entfalten.

Ein weiterer Gegenstand dieser Anmeldung ist ein Verfahren zur Herstellung einer zuvor beschriebenen erfindungsgemäßen Reinigungsmitteleinmalportion, umfassend die aufeinander folgenden Schritte
i) Bereitstellen einer wasserlöslichen Aufnahmekammer;
ii) Einbringen mindestens einer Gelphase in die Aufnahmekammer;
iii) Einfüllen mindestens eines Pulvers in die Aufnahmekammer;
iv) Aufbringen eines Formkörpers auf das Pulver;
v) Verschließen der befüllten Aufnahmekammer mit einem wasserlöslichen Verschlusselement.

Zur Herstellung der wasserlöslichen Aufnahmekammer eignen sich eine Reihe unterschiedlicher Verfahren, einschließlich des Gießens oder Kompaktierens wasserlöslicher, gegebenenfalls wasch- oder reinigungsaktiver Substanzen oder Substanzgemische. Aufgrund der hohen Verfahrenseffizienz werden jedoch das Spritzgießen wasserlöslichen Materials und insbesondere das Tiefziehen wasserlöslicher Filme zur Bereitstellung der wasserlöslichen Aufnahmekammer bevorzugt.

Das wasserlösliche Material oder der wasserlösliche Film, welche die Aufnahmekammer ausbildet, kann ein oder mehrere strukturell verschiedene wasserlösliche(s) Polymer(e) umfassen. Als wasserlösliche(s) Polymer(e) eignet sich insbesondere wasserlösliches Polymer aus der Gruppe der (gegebenenfalls acetalisierter) Polyvinylalkohole (PVOH) sowie deren Copolymere.

Wasserlösliche Filme zur Herstellung der wasserlöslichen Verpackung basieren bevorzugt auf einem Polyvinylalkohol oder einem Polyvinylalkoholcopolymer, dessen Molekulargewicht im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt.

Die Herstellung der Polyvinylalkohol und Polyvinylalkoholcopolymere schließt in der Regel die Hydrolyse intermediären Polyvinylacetats ein. Bevorzugte Polyvinylalkohole und Polyvinylalkoholcopolymere weisen einen Hydrolysegrad 70 bis 100 Mol-%, vorzugsweise 80 bis 90 Mol-%, besonders bevorzugt 81 bis 89 Mol-% und insbesondere 82 bis 88 Mol-% auf.

Bevorzugte Polyvinylalkoholcopolymere umfassen neben Vinylalkohol eine ethylenisch ungesättigte Carbonsäure, deren Salz oder deren Ester. Besonders bevorzugt enthalten solche Polyvinylalkoholcopolymere neben Vinylalkohol Sulfonsäuren wie die 2-Acrylamido-2-methyl-1-propansulfonsäure (AMPS), Acrylsäure, Methacrylsäure, Acrylsäureester, Methacrylsäureester oder Mischungen daraus; unter den Estern sind C₁₋₄-Alkylester oder -Hydroxyalkylester bevorzugt. Als weitere Monomere kommen ethylenisch ungesättigte Dicarbonsäuren, beispielsweise Itaconsäure, Maleinsäure, Fumarsäure und Mischungen daraus in Betracht.

Geeignete wasserlösliche Film zum Einsatz in den wasserlöslichen Verpackungen gemäß der Erfindung sind Film, die von der Firma MonoSol LLC beispielsweise unter der Bezeichnung M8630, M8720, M8310, C8400 oder M8900 vertrieben werden. Andere geeignete Film umfassen Film mit der Bezeichnung Solublon^{®} PT, Solublon^{®} GA, Solublon^{®} KC oder Solublon^{®} KL von der Aicello Chemical Europe GmbH oder die Film VF-HP von Kuraray sowie die Hi-Selon Serie der Mitsubishi Chemical Corporation.

Die wasserlöslichen Filme können als weitere Inhaltsstoffe zusätzliche Wirk- oder Füllstoffe aber auch Weichmacher und/oder Lösungsmittel, insbesondere Wasser, enthalten.

Zur Gruppe der weiteren Wirkstoffe zählen dabei beispielsweise Materialien, welche die von dem Filmmaterial umschlossenen Inhaltsstoffe des Waschmittels vor Zersetzung oder Desaktivierung durch Lichteinstrahlung schützen. Als besonders geeignet haben sich hier Antioxidantien, UV-Absorber und Fluoreszensfarbstoffe erwiesen.

Als Weichmacher können beispielsweise Glycerin, Ethylenglycol, Diethylenglycol, Propandiol, 2-Methyl-1,3-propandiol, Sorbit oder deren Gemische eingesetzt werden.

Zur Verminderung ihrer Reibungskoeffizienten kann die Oberfläche des wasserlöslichen Films der Waschmittelportionseinheit optional mit feinem Pulver abgepudert werden. Natriumaluminosilicat, Siliciumdioxid, Talk und Amylose sind Beispiele für geeignete Pudermittel.

Die erfindungsgemäßen Reinigungsmitteleinmalportionen umfassen mindestens ein Pulver und mindestens einen, von dem Pulver verschiedenen Formkörper, wobei Pulver und Formkörper in einer bevorzugten Ausführungsform um mindestens eine Gelphase ergänzt werden. Wie weiter oben beschrieben, ist die Gelphase von dem Pulver und dem Formkörper verschieden.

Die Gelphase wird vorzugsweise vor dem Pulver in die Aufnahmekammer eingebracht. Die Anzahl der in die Aufnahmekammer eingebrachten Gelphasen kann variieren. Beispielsweise kann in Schritt ii) des Verfahrens nur eine einzelne Gelphase in die Aufnahmekammer eingebracht werden. Alternativ und wegen der Erhöhung der rezepturellen Freiheitsgrade und der verbesserten Produktoptik können in Schritt ii) zwei Gelphasen oder drei Gelphasen oder vier Gelphasen in die Aufnahmekammer eingebracht werden. Die zwei, drei, vier oder mehr Gelphasen unterscheiden sich vorzugsweise hinsichtlich ihrer Zusammensetzung und umfassen beispielsweise unterschiedliche Aktivstoffe, weisen unterschiedliche Aktivstoffgehalte oder unterschiedliche Farben auf.

Werden in Schritt ii) mehr als eine Gelphase, also beispielsweise zwei oder drei oder vier Gelphasen in die Aufnahmekammer eingebracht, so werden diese zwei oder drei oder vier Gelphasen vorzugsweise derart in die Aufnahmekammer eingebracht werden, dass diese miteinander nicht in direktem Kontakt stehen. Diese Vorgehensweise vermeidet unerwünschte Reaktionen zwischen einzelnen in den unterschiedlichen Gelphasen enthaltenen Wirkstoffen und verbessert die Produktoptik.

In Schritt iii) des Verfahrens wird mindestens ein Pulver in die Aufnahmekammer eingefüllt. Sofern in dem vorherigen Schritt eine oder mehrere Gelphasen in die Aufnahmekammer eingebracht wurden, wird das Pulver in Schritt iii) vorzugsweise derart in die Aufnahmekammer eingefüllt, dass die der Öffnung der Aufnahmekammer zugewandte Oberfläche der Gelphase(n) vollständig mit Pulver bedeckt ist.

Für die effiziente Befüllung der Aufnahmekammern mit dem Pulver hat es sich als vorteilhaft erwiesen, wenn das Pulver, eine Rieselfähigkeit von größer 40 %, bevorzugt von größer 50 %, insbesondere von größer 60 % bezogen auf den Standard aufweist.

Die Rieselfähigkeit des Pulvers betrifft sein Vermögen, unter eigenem Gewicht frei zu rieseln. Die Rieselfähigkeit wird bestimmt, in dem die Auslaufzeit von 1000 ml Reinigungsmittelpulver aus einem genormten, an seiner Auslaufrichtung zunächst verschlossenen Rieseltesttrichter mit einem Auslauf von 16,5 mm Durchmesser durch Messen der Zeit für den vollständigen Auslauf des körnigen Gemenges, insbesondere der pulverförmigen Phase, bevorzugt des Pulvers und/oder Granulats, z.B. des Pulvers nach dem Öffnen des Auslaufs gemessen und mit der Auslaufgeschwindigkeit (in Sekunden) eines Standardprüfsands verglichen wird, dessen Auslaufgeschwindigkeit als 100 % definiert wird. Das definierte Sandgemisch zur Kalibrierung der Rieselapparatur ist trockener Seesand. Dabei wird Seesand mit einem Teilchendurchmesser von 0,4 bis 0,8 mm verwendet, erhältlich beispielsweise von Carl Roth, Deutschland CAS-Nr. [14808-60-7]. Zur Trocknung wird der Seesand vor der Messung 24 h bei 60 °C im Trockenschrank auf einer Platte bei einer maximalen Schichthöhe von 2 cm, getrocknet.

Bevorzugte Ausführungsformen der erfindungsgemäßen Pulver weisen einen Schüttwinkel/Böschungswinkel von 26 bis 35, von 27 bis 34, von 28 bis 33, wobei der Schüttwinkel gemäß der unten genannten Methode nach 24 h nach der Herstellung des körnigen Gemenges der festförmigen Zusammensetzung, insbesondere der pulverförmigen festen Phase, bevorzugt des Pulvers und/oder Granulats und Lagerung bei 20 °C bestimmt wird, auf. Solche Schüttwinkel haben den Vorteil, dass die Befüllung der Kavitäten mit der mindestens einen festen Phase vergleichsweise schnell und präzise erfolgen kann.

Zur Bestimmung des Schüttwinkels (oder auch Böschungswinkel genannt) des Pulvers wird ein Pulvertrichter mit 400ml Inhalt und einem Ablauf mit einem Durchmesser von 25mm gerade in ein Stativ gehängt. Der Trichter wird mittels eines manuell zu bedienenden Rändelrads mit einer Geschwindigkeit von 80 mm/min nach oben gefahren, so dass das körnige Gemenge, insbesondere die pulverförmige Phase, bevorzugt das Pulver und/oder Granulat, z.B. das Pulver herausrieselt. Dadurch bildet sich ein sogenannter Schüttkegel. Die Schüttkegelhöhe und der Schüttkegeldurchmesser werden für die einzelnen partikulären Phasen bestimmt. Aus dem Quotienten der Schüttkegelhöhe und dem Schüttkegeldurchmesser * 100 berechnet sich der Böschungswinkel.

Besonders geeignet sind solche Pulver, die eine Rieselfähigkeit in % zum vorstehend angegebenen Standardprüfstoff von größer als 40 %, bevorzugt größer als 50, insbesondere größer als 55%, besonders bevorzugt größer als 60%, insbesondere bevorzugt zwischen 63 % und 80 %, beispielsweise zwischen 65 % und 75 % aufweisen. Insbesondere geeignet sind solche körnigen Gemenge einer festförmigen Zusammensetzung, insbesondere solche Pulver und/oder Granulate, die eine Rieselfähigkeit in % zum vorstehend angegebenen Standardprüfstoff von größer als 40 %, bevorzugt größer als 45 %, insbesondere größer als 50 %, besonders bevorzugt größer als 55 %, insbesondere bevorzugt größer als 60 % aufweisen, wobei die Messung der Rieselfähigkeit 24 h nach der Herstellung des Pulvers und Lagerung bei 20 °C durchgeführt wird.

Geringere Werte für die Rieselfähigkeit sind eher nicht geeignet, da aus prozesstechnischer Sicht eine genaue Dosierung des Pulvers notwendig ist. Insbesondere die Werte größer 50 %, insbesondere größer 55 %, bevorzugt größer 60 % (wobei die Messung der Rieselfähigkeit 24 h nach der Herstellung des Pulvers und Lagerung bei 20 °C durchgeführt wird) haben sich als vorteilhaft erwiesen, da sich durch die gute Dosierbarkeit der körnigen Gemenge, insbesondere der pulverförmigen Phasen, bevorzugt der Pulver und/oder Granulate, z.B. Pulver nur geringe Schwankungen in der dosierten Menge bzw. der Zusammensetzung ergeben. Die genauere Dosierung führt zu einer gleichbleibenden Produktleistung, wirtschaftliche Verluste durch Überdosierung werden so vermieden. Weiterhin ist es vorteilhaft, dass die körnigen Gemenge, insbesondere die pulverförmige Phase, bevorzugt das Pulver und/oder Granulat, z.B. das Pulver gut dosierbar sind, so erreicht man einen schnelleren Ablauf des Dosierprozesses. Weiterhin wird durch eine solch gute Rieselfähigkeit besser vermieden, dass das Pulver auf den Teil der wasserlöslichen Umhüllung gelangt, die für die Herstellung der Siegelnaht notwendig ist.

Der Füllgrad der Aufnahmekammer liegt im Anschluss an Schritt iii) vorzugsweise oberhalb 60 Vol.-%, insbesondere oberhalb 70 Vol.-%.

In dem an den Schritt iii) anschließenden Schritt iv) wird der Formkörper auf das Pulver aufgebracht. Dies erfolgt vorzugweise derart, dass die der Öffnung der Aufnahmekammer zugewandte Oberfläche des Pulvers zu mehr als 75%, vorzugsweise zu mehr als 75%, bevorzugt zu mehr als 75%, insbesondere zu mehr als 80% und ganz besonders bevorzugt zu mehr als 85 % von dem Formkörper bedeckt ist.

Das Aufbringen in Schritt iv) kann durch das Auflegen vorgeformter Formkörper oder durch Aufbringen in situ durch Erstarrung einer fließfähigen Schmelze oder eines fleißfähigen Gels erhalten.

Der in Schritt iv) auf das Pulver aufgebrachte Formkörper ist vorzugsweise vorgeformt, wird also beispielsweise nicht in Schritt iv) in situ durch Erstarrung einer fließfähigen Schmelze oder eines fleißfähigen Gels erhalten.

Die Raumform des Formkörpers ist grundsätzlich frei wählbar, seine Seitenflächen können beispielsweise konvex, konkav oder plan ausgestaltet sein. Gleichzeitig haben sich jedoch bestimmte räumliche Ausgestaltungen vor dem Hintergrund der Herstellbarkeit und Verarbeitung der Formkörper als besonders vorteilhaft erwiesen haben.

Die in Schritt iv) eingesetzten Formkörper weisen vorzugsweise eine flache Unterseite auf, deren größte Diagonale größer ist als die Höhe des Formkörpers, wobei der Formkörper mit der flachen Unterseite auf die Oberfläche des Pulvers aufgebracht wird. Entsprechenden Formkörper sind nicht nur in einfacher Weise, beispielsweise mittels Gießverfahren oder Tablettierung herstellbar, sie lassen sich zudem auch in einfacher Weise maschinell auf das Pulver aufbringen. Bevorzugt ist es, wenn der Formkörper in Schritt iv) eine flache Unterseite aufweist, deren größte Diagonale mehr als das 1,5-fache, vorzugsweise mehr als das 2-fache der Höhe des Formkörpers beträgt, wobei der Formkörper mit der flachen Unterseite auf die Oberfläche des Pulvers aufgebracht wird.

Für die Herstellbarkeit, beispielsweise in Bezug auf die Entformung des Formkörpers aus einer Gießform, hat es sich als vorteilhaft erwiesen, wenn die Unterseite des Gelkörpers keine Ecken aufweist. Bevorzugte Gelkörper sind daher durch ovale Unterseiten oder alternativ durch ellipsoide oder runde, vorzugsweise runde Unterseiten gekennzeichnet. Entsprechende Formkörper mit nicht eckiger Unterseite werden aufgrund ihrer Optik zudem von vielen Verbrauchern bevorzugt. Bevorzugt sind daher beispielsweise solche Formkörper, welche eine Unterseite und eine Oberseite aufweisen, die durch eine zylindrische Mantelfläche miteinander verbunden sind.

In bevorzugten Verfahrensvarianten
- weist der Formkörper in Schritt iv) eine ovale Unterseite auf und der Formkörper wird mit der flachen Unterseite auf die Oberfläche des Pulvers aufgebracht, oder
- weist der Formkörper in Schritt iv) eine ellipsoide oder runde, vorzugsweise eine runde Unterseite auf und der Formkörper wird mit der runden Unterseite auf die Oberfläche des Pulvers aufgebracht.

Vorteile in Bezug auf die Raumnutzung bei Herstellung und Verpackung können durch eckige Formkörper realisiert werden. Werden die Formkörper beispielsweise in Form von Platten gegossen, welche nachfolgend in Formkörper zerschnitten werden, so sind eckige Unterseiten von Vorteil, da sich derartige Formkörper ohne Anfall von Restmengen zerschneiden lassen. In einer alternativen Ausführungsform des Verfahrens weisen die in Schritt iv) eingesetzten Formkörper daher eckige Unterseiten, insbesondere dreieckige, viereckige oder sechseckige Unterseiten auf und werden mit diesen Unterseiten auf die Oberfläche des Pulvers aufgebracht. Für die Weiterverarbeitung oder Verpackung kann es von Vorteil sein, wenn der Formkörper eine eckige Unterseite mit abgerundeten Ecken aufweist.

In Bezug auf die Herstellung, Verpackung und den Gebrauch der Waschmittelportionseinheiten hat es sich zudem als vorteilhaft erwiesen, wenn der in Schritt iv) mit seiner Unterseite auf das Pulver aufgebrachte Formkörper eine zur Unterseite planparallele Oberseite aufweist.

In einer ersten bevorzugten geometrischen Ausführungsform weist der Formkörper eine Unterseite und eine Oberseite auf, welche die gleiche geometrische Form aufweisen, wobei die Unterseite und die Oberseite die gleiche Flächengröße besitzen. Entsprechende Formkörper lassen sich, wie bereits zuvor beschrieben, in einfacher Weise beispielsweise durch Gießen von Platten und nachfolgendes zerschneiden der Platten zu einzelnen Gelkörpern herstellen. Diese Formkörper können bei dem Aufbringen, bevorzugt Auflegen, auf das Pulver in Schritt iv) zudem in einfacherer Weise durch Auslegen räumlich ausgerichtet werden als Formkörper mit einer geringeren Körpersymmetrie. Dies gilt insbesondere für Formkörper, welche gleichzeitig eine zur Unterseite planparallele Oberseite aufweisen. Beispiele für derartige Formkörper sind Kreiszylinder, elliptische Zylinder, Parallelepipede, Rhomboeder, gerade oder schiefe Prismen, Quader oder Würfel. Zur Gruppe der Kreiszylinder und elliptischen Zylinder zählen wiederum die senkrechten Kreiszylinder und elliptischen Zylinder sowie die schiefen Kreiszylinder und elliptischen Zylinder. Aufgrund ihrer einfachen Herstellung durch Vereinzelung aus einer Platte bevorzugt sind Formkörper in Form senkrechter Kreiszylinder, senkrechter elliptischer Zylinder, gerader Prismen, gerader Quader oder Würfel.

In einer alternativen Ausführungsform weist der Formkörper eine Unterseite und eine Oberseite auf, welche die gleiche geometrische Form besitzen, wobei die Unterseite und die Oberseite unterschiedliche Flächengrößen aufweisen. Entsprechende Formkörper können aufgrund ihrer attraktiven Optik oder ihrer optimierten Passform bei gleichzeitig vergleichsweise einfacher Herstellbarkeit bevorzugt sein. Beispiele für derartige Formkörper sind Kreiszylinder oder elliptische Zylinder mit einer konvexen oder konkaven Unterseite und einer planen Oberseite bzw. mit einer planen Unterseite und einer konvexen oder konkaven Oberseite. Weitere Beispiele sind Kegelstümpfe oder Pyramidenstümpfe.

Zur Verwirklichung der für den Anmeldungsgegenstand kennzeichnenden reduzierten Kontaktfläche zwischen Pulver und Innenseite des Verschlusselements ist es bevorzugt, in Schritt iv) einen Formkörper auf das Pulver aufzulegen, dessen Unterseite einen Umriss aufweist, welcher der Öffnungsfläche der Aufnahmekammer nachgebildet ist und der Formkörper mit der Unterseite auf die Oberfläche des Pulvers aufgebracht wird.

Als Nachbildung wird eine zweidimensionale Form, in diesem Fall der Umriss der Unterseite des Formkörpers, bezeichnet, welche der zweidimensionalen Form einer weiteren Fläche, in diesem Fall dem Umriss der Öffnungsfläche der Aufnahmekammer, beispielsweise in Bezug auf die Anzahl der vorhandenen Ecken oder das Verhältnis der Seitenlängen oder die Krümmungsradien der Seiten oder Ecken gleicht.

Wird in Schritt iv) ein Formkörper auf das Pulver aufgebracht, dessen Unterseite einen Umriss aufweist, welcher dem Umriss der Öffnungsfläche der Aufnahmekammer nachgebildet ist, so weist dieser Formkörper in der Regel für seine Unterseite eine Umrissfläche auf, welche kleiner ist als die Umrissfläche der Aufnahmekammeröffnung. In bevorzugten Verfahrensvarianten weist der Formkörper in Schritt iv) daher eine Unterseite auf, deren Umriss aus dem Umriss der Öffnungsfläche der Aufnahmekammer durch eine Verkleinerung mit einem Faktor von 0,75 bis 0,98 erhalten wird, wobei der Formkörper mit der Unterseite auf die Oberfläche des Pulvers aufgebracht wird.

Der Füllgrad der Aufnahmekammer liegt im Anschluss an Schritt iv) vorzugsweise oberhalb 85 Vol.-%, insbesondere oberhalb 94 Vol.-%.

Die befüllte wasserlösliche Aufnahmekammer wird in Schritt v) vorzugsweise mit einem wasserlöslichen Film verschlossen.

Wird die in Schritt i) bereitgestellte wasserlösliche Aufnahmekammer durch Tiefziehen eines ersten wasserlöslichen Films erhalten und in Schritt v) mit einem zweiten wasserlöslichen Film verschlossen, so ist es zur Verringerung der eingesetzten Filmmenge bevorzugt, wenn der zweite wasserlösliche Film eine geringere Dicke aufweist als der erste wasserlösliche Film.

In einem solchen Fall weist der erste wasserlösliche Film vorzugsweise eine Dicke von 60 bis 2000 µm und der zweite wasserlösliche Film eine Dicke von 40 bis 120 µm auf. Besonders bevorzugt ist es, wenn der zweite wasserlösliche Film eine Dicke von 80 µm oder weniger, bevorzugt von 70 µm oder weniger, insbesondere von 65 µm oder weniger, ganz besonders bevorzugt von 55 µm oder weniger aufweist. Derart geringe Filmdicken sind in dem erfindungsgemäßen Verfahren trotz der Befüllung der wasserlöslichen Aufnahmekammer mit Pulver ohne Einbußen an mechanischer Stabilität der Reinigungsmitteleinmalportion, beispielsweise verursacht durch das Durchstechen des Verschlussfilms durch einzelne Pulverpartikel, auch bei Einsatz von Schrumpfverfahren realisierbar, da der Verschlussfilm aufgrund des Einsatzes des aufgebrachten Formkörpers nur in sehr geringem Umfang mit dem Pulver in Kontakt steht.

Im Hinblick auf die mechanische Stabilität der Reinigungsmitteleinmalportion bei gleichzeitig geringem Einsatz von Verpackungsmitteln ist es bevorzugt, wenn das Verhältnis der Dicke des ersten wasserlöslichen Films zur Dicke des zweiten wasserlöslichen Films von 3:1 bis 1:1, bevorzugt von 2,5:1 bis 1,1:1, insbesondere von 2:1 bis 1,2:1 beträgt.

Zur Verbesserung der Produkthaptik und -optik wird die verschlossene befüllte Aufnahmekammer nach Schritt v) in einem weiteren Schritt vi) für eine Zeitdauer von 0,5 bis 20 Sekunden auf Temperaturen oberhalb 120°C, vorzugsweise auf Temperaturen im Bereich von 140 bis 220°C erwärmt. Durch die Wärmebehandlung wird das eingesetzte wasserlösliche Verpackungsmaterial, insbesondere der eingesetzte wasserlösliche Film geschrumpft. Die Reinigungsmitteleinmalportion gewinnt an Stabilität und ein Eindringen des Pulvers zwischen den Formkörper und die Innenseite des Verschlusselements wird unterbunden.

Zusammenfassend werden durch diese Anmeldung u.a. die folgenden Gegenstände bereitgestellt:
1. Reinigungsmitteleinmalportion, umfassend
   a) eine wasserlösliche Verpackung, umfassend
   a1) mindestens eine wasserlösliche Aufnahmekammer
   a2) ein diese wasserlösliche Aufnahmekammer verschließendes wasserlösliches Verschlusselement
   b) eine phosphatfreie Reinigungsmittelzusammensetzung, umfassend
   b1) mindestens eine Gelphase
   b2) mindestens ein Pulver,
   b3) mindestens einen, von Pulver und Gelphase verschiedenen, Formkörper,
   wobei der Formkörper in der Kammer so angeordnet ist, dass er sich nicht in direktem Kontakt mit der mindestens einen Gelphase befindet.
2. Reinigungsmitteleinmalportion nach Punkt 1, wobei der Formkörper in der Kammer so angeordnet ist, dass er sich in direktem Kontakt mit dem Verschlusselement befindet.
3. Reinigungsmitteleinmalportion nach einem der vorstehenden Punkte, dadurch gekennzeichnet, dass der Formkörper in der Kammer so angeordnet ist, dass er sich in direktem Kontakt mit dem Pulver befindet.
4. Reinigungsmitteleinmalportion nach einem der vorstehenden Ansprüche, dadurch gekennzeichnet, dass die mindestens eine Gelphase und/oder der Formkörper mit dem Pulver Kontakt haben.
5. Reinigungsmitteleinmalportion nach einem der vorstehenden Punkte, dadurch gekennzeichnet, dass der Formkörper, der sich in Kontakt mit dem Verschlusselement befindet, eine im Wesentlichen gleiche Höhe aufweist.
6. Reinigungsmitteleinmalportion nach einem der vorstehenden Punkte, dadurch gekennzeichnet, dass der Formkörper eine Höhe von 2,5 bis 9 mm, bevorzugt 2,75 bis 6,0 mm, insbesondere 3,0 bis 5,5 mm aufweist.
7. Reinigungsmitteleinmalportion nach einem der vorstehenden Punkte, dadurch gekennzeichnet, dass der Formkörper mindestens eine im Wesentlichen flache Seite, bevorzugt eine im Wesentlichen flache Ober- und/oder Unterseite, aufweist.
8. Reinigungsmitteleinmalportion nach einem der vorstehenden Punkte, dadurch gekennzeichnet, dass der Formkörper in der Kammer so angeordnet ist, dass die Innenseite des Verschlusselements zu weniger als 10 %, bevorzugt zu weniger als 8 %, insbesondere zu weniger als 6 %, ganz besonders zu weniger als 3% ihrer Oberfläche in Kontakt mit dem Pulver steht.
9. Reinigungsmitteleinmalportion nach einem der vorstehenden Punkte, dadurch gekennzeichnet, dass die Seite des Formkörpers, welche mit dem Verschlusselement in Kontakt steht, zu mindestens 70 %, bevorzugt mindestens 75 %, insbesondere zu mindestens 80 %, besonders bevorzugt zu mehr als 85 % ihrer Oberfläche Kontakt mit der Innenseite des Verschlusselements aufweist.
10. Reinigungsmitteleinmalportion nach Punkt 9, dadurch gekennzeichnet, dass die Seite des Formkörpers, welche mit dem Verschlusselement in Kontakt steht im wesentlichen vollflächigen Kontakt mit dem Verschlusselement aufweist.
11. Reinigungsmitteleinmalportion nach einem der vorstehenden Punkte, dadurch gekennzeichnet, dass die Innenseite des Verschlusselements zu mehr als 70 %, bevorzugt zu mehr als 75 %, insbesondere zu mehr als 80 %, ganz besonders zu mehr als 85% ihrer Oberfläche von dem mindestens einen Formkörper bedeckt wird.
12. Reinigungsmitteleinmalportion nach einem der vorstehenden Punkte, dadurch gekennzeichnet, dass der Formkörper eine zur Unterseite im Wesentlichen planparallele Oberseite aufweist.
13. Reinigungsmitteleinmalportion nach einem der vorstehenden Punkte, dadurch gekennzeichnet, dass der Formkörper im Wesentlichen nicht elastisch ist.
14. Reinigungsmitteleinmalportion nach einem der vorstehenden Punkte, dadurch gekennzeichnet, dass der Formkörper eine geringe Bruchfestigkeit bei Druckbelastung aufweist, die bevorzugt, bestimmt in einer Kraft-Wege Anordnung mit einem Kugelkörper (Durchmesser d=19 mm, Sollstrecke = 3 mm, Testvorschubgeschwindigkeit von 0,5 mm/s und einer Vorprüfkraft von 5 Gramm, eine Eindringtiefe von 0,1 mm bis 1,0 mm, bevorzugt von 0,15 mm bis 0,8 mm, insbesondere von 0,2 bis 0,6 mm aufweist.
15. Reinigungsmitteleinmalportion nach einem der vorstehenden Punkte, dadurch gekennzeichnet, dass das Verschlusselement ein wasserlöslicher Film ist.
16. Reinigungsmitteleinmalportion nach Punkt 15, dadurch gekennzeichnet, dass der wasserlösliche Film eine Dicke von 80 µm oder weniger, bevorzugt von 70 µm oder weniger, insbesondere von 65 µm oder weniger, ganz besonders bevorzugt von 55 µm oder weniger aufweist.
17. Reinigungsmitteleinmalportion nach Punkt 15 oder 16, dadurch gekennzeichnet, dass der wasserlösliche Film, der das Verschlusselement bildet, eine geringere Dicke als die durchschnittliche Dicke der wasserlöslichen Aufnahmekammer aufweist.
18. Reinigungsmitteleinmalportion nach einem der vorstehenden Punkte, dadurch gekennzeichnet, dass die Innenseite des Verschlusselements nicht in Kontakt mit dem Pulver steht.
19. Reinigungsmitteleinmalportion nach einem der vorstehenden Punkte, dadurch gekennzeichnet, dass das Pulver Partikel mit einem Partikeldurchmesser bis 2000 µm, insbesondere bis 1000 µm aufweist und/oder mindestens 80 % der Partikel einen Partikeldurchmesser von 100 bis 2000 µm, bevorzugt 150 µm bis 1500 µm aufweisen.
20. Reinigungsmitteleinmalportion nach einem der vorstehenden Punkte, dadurch gekennzeichnet, dass das Gesamtgewicht der Reinigungsmitteleinmalportion von 10 g bis 25 g, bevorzugt von 12 bis 22 g, besonders bevorzugt von 13 g bis 20 g beträgt.
21. Reinigungsmitteleinmalportion nach einem der vorstehenden Punkte, dadurch gekennzeichnet, dass das Gesamtgewicht des Pulvers von 7 g bis 20 g, bevorzugt von 8 bis 15 g, besonders bevorzugt von 10 g bis 12 g beträgt.
22. Reinigungsmitteleinmalportion nach einem der vorstehenden Punkte, dadurch gekennzeichnet, dass das Gesamtgewicht eines Formkörpers von 4 g bis 8 g, bevorzugt von 5 bis 7 g beträgt.
23. Reinigungsmitteleinmalportion nach einem der vorstehenden Punkte, dadurch gekennzeichnet, dass das Gewichtsverhältnis von Pulver zu Formkörper von 4:1 bis 1:1, bevorzugt von 3,75:1 bis 1,25:1, insbesondere von 3,5:1 bis 1,5:1, ganz besonders bevorzugt von 3,25:1 bis 1,75:1 beträgt.
24. Reinigungsmitteleinmalportion nach einem der vorstehenden Punkte, dadurch gekennzeichnet, dass in der Kammer genau eine Phase, umfassend ein Pulver, und genau ein Formkörper enthalten ist.
25. Reinigungsmitteleinmalportion nach einem der vorstehenden Punkte, dadurch gekennzeichnet, dass mindestens eine, von dem Formkörper verschiedene, Gelphase in der Kammer enthalten ist.
26. Reinigungsmitteleinmalportion nach einem der vorstehenden Punkte, dadurch gekennzeichnet, dass eine, von dem Formkörper verschiedene, Gelphase in der Kammer enthalten ist.
27. Reinigungsmitteleinmalportion nach einem der vorstehenden Punkte, dadurch gekennzeichnet, dass zwei, von dem Formkörper verschiedene, Gelphasen in der Kammer enthalten sind.
28. Reinigungsmitteleinmalportion nach einem der vorstehenden Punkte, dadurch gekennzeichnet, dass drei, von dem Formkörper verschiedene, Gelphasen in der Kammer enthalten sind.
29. Reinigungsmitteleinmalportion nach einem der vorstehenden Punkte, dadurch gekennzeichnet, dass vier, von dem Formkörper verschiedene, Gelphasen in der Kammer enthalten sind.
30. Reinigungsmitteleinmalportion nach einem der vorstehenden Punkte, dadurch gekennzeichnet, dass die mindestens eine Gelphase eine bei 20 °C und 1 bar fest ist.
31. Reinigungsmitteleinmalportion nach einem der vorstehenden Punkte, dadurch gekennzeichnet, dass die mindestens eine Gelphase, wasserlösliches Polymer aus der Gruppe der (ggf. acetalisierten) Polyvinylalkohole sowie deren Copolymeren umfasst.
32. Reinigungsmitteleinmalportion nach Punkt 31, dadurch gekennzeichnet, dass die mindestens eine Gelphase, (ggf. acetalisierte) Polyvinylalkohole sowie deren Copolymeren in einer Menge von 8,5 bis 25 Gew.-%, bezogen auf das Gesamtgewicht der Gelphase umfasst.
33. Reinigungsmitteleinmalportion nach einem der vorstehenden Punkte, dadurch gekennzeichnet, dass das Gewicht aller Gelphasen von 0,1 g und 4 g, bevorzugt von 0,4 bis 3 g, insbesondere bevorzugt 0,7 bis 2,5 g beträgt.
34. Reinigungsmitteleinmalportion nach einem der vorstehenden Punkte, dadurch gekennzeichnet, dass das Gewichtsverhältnis des Formkörpers zur Gelphase(n) (Summe aller Gelphasen), von 8:1 bis 1:2, bevorzugt von 6:1 bis 1:1, insbesondere von 4,5:1 bis 1,5:1, ganz besonders bevorzugt von 4:1 bis 1,75:1 beträgt.
35. Reinigungsmitteleinmalportion nach einem der vorstehenden Punkte, dadurch gekennzeichnet, dass das Gewichtsverhältnis des Pulvers zur Gelphase (Summe aller Gelphasen), von 20:1 bis 1:1, bevorzugt von 12:1 bis 1,5:1, insbesondere von 10:1 bis 2:1, ganz besonders bevorzugt von 8:1 bis 2,5:1 beträgt.
36. Reinigungsmitteleinmalportion nach einem der vorstehenden Punkte, dadurch gekennzeichnet, dass keine in der Kammer enthaltenen Phasen flüssig bei 20 °C ist und/oder das Reinigungsmittel nicht mehr als 5 Gew.-% anionisches Tensid, bezogen auf das Gesamtgewicht des Reinigungsmittels, enthalten ist.
37. Verwendung einer Reinigungsmitteleinmalportion nach einem der Punkte 1 bis 36 in einem maschinellen Geschirrspülverfahren.
38. Verfahren zur Herstellung einer Reinigungsmittelportionseinheit in einer wasserlöslichen Verpackung nach einem der Punkte 1 bis 36, umfassend die aufeinander folgenden Schritte
   i) Bereitstellen einer wasserlöslichen Aufnahmekammer;
   ii) Einbringen mindestens einer Gelphase in die Aufnahmekammer;
   iii) Einfüllen mindestens eines Pulvers in die Aufnahmekammer;
   iv) Aufbringen eines Formkörpers auf das Pulver;
   v) Verschließen der befüllten Aufnahmekammer mit einem wasserlöslichen Verschlusselement.
39. Verfahren nach Punkt 38, wobei die wasserlösliche Aufnahmekammer durch Spritzgießen eines wasserlöslichen Materials erhalten wird.
40. Verfahren nach Punkt 38, wobei die wasserlösliche Aufnahmekammer durch Tiefziehen eines wasserlöslichen Films erhalten wird.
41. Verfahren nach einem der vorstehenden Punkte, wobei die wasserlösliche Verpackung wasserlösliches Polymer aus der Gruppe der (gegebenenfalls acetalisierter) Polyvinylalkohole (PVAL) sowie deren Copolymere umfasst.
42. Verfahren nach einem der vorstehenden Punkte, wobei in Schritt ii) genau eine Gelphase in die Aufnahmekammer eingebracht wird.
43. Verfahren nach einem der vorstehenden Punkte, wobei in Schritt ii) zwei Gelphasen in die Aufnahmekammer eingebracht werden.
44. Verfahren nach einem der vorstehenden Punkte, wobei in Schritt ii) drei Gelphasen in die Aufnahmekammer eingebracht werden.
45. Verfahren nach einem der vorstehenden Punkte, wobei in Schritt ii) vier Gelphasen in die Aufnahmekammer eingebracht werden
46. Verfahren nach einem der Punkte 43 bis 45, wobei die zwei oder drei oder vier Gelphasen derart in die Aufnahmekammer eingebracht werden, dass diese miteinander nicht in direktem Kontakt stehen.
47. Verfahren nach einem der vorstehenden Punkte, wobei das Pulver in Schritt iii) derart in die Aufnahmekammer eingefüllt wird, dass die der Öffnung der Aufnahmekammer zugewandte Oberfläche der Gelphase(n) vollständig mit Pulver bedeckt ist.
48. Verfahren nach einem der vorstehenden Punkte, wobei das Pulver, eine Rieselfähigkeit von größer 40 %, bevorzugt von größer 50 %, insbesondere von größer 60 % bezogen auf den Standard aufweist.
49. Verfahren nach einem der vorstehenden Punkte, wobei die Aufnahmekammer im Anschluss an Schritt iii) eine Füllgrad oberhalb 60 Vol.-%, vorzugsweise oberhalb 70 Vol.-% aufweist.
50. Verfahren nach einem der vorstehenden Punkte, wobei der Formkörper in Schritt iv) derart auf das Pulver aufgebracht wird, dass die der Öffnung der Aufnahmekammer zugewandte Oberfläche des Pulvers zu mehr als 75%, vorzugsweise zu mehr als 75%, bevorzugt zu mehr als 75%, insbesondere zu mehr als 80% und ganz besonders bevorzugt zu mehr als 85 % von dem Formkörper bedeckt ist.
51. Verfahren nach einem der vorstehenden Punkte, wobei der Formkörper in Schritt iv) vorgeformt ist.
52. Verfahren nach einem der vorstehenden Punkte, wobei der Formkörper in Schritt iv) eine flache Unterseite aufweist, deren größte Diagonale größer ist als die Höhe des Formkörpers und der Formkörper mit der flachen Unterseite auf die Oberfläche des Pulvers aufgebracht wird.
53. Verfahren nach einem der vorstehenden Punkte, wobei der Formkörper in Schritt iv) eine flache Unterseite aufweist, deren größte Diagonale mehr als das 1,5-fache, vorzugsweise mehr als das 2-fache der Höhe des Formkörpers beträgt und der Formkörper mit der flachen Unterseite auf die Oberfläche des Pulvers aufgebracht wird.
54. Verfahren nach einem der vorstehenden Punkte, wobei der Formkörper in Schritt iv) eine ovale Unterseite aufweist und der Formkörper mit der flachen Unterseite auf die Oberfläche des Pulvers aufgebracht wird.
55. Verfahren nach einem der vorstehenden Punkte, wobei der Formkörper in Schritt iv) eine ellipsoide oder runde, vorzugsweise eine runde Unterseite aufweist und der Formkörper mit der runden Unterseite auf die Oberfläche des Pulvers aufgebracht wird.
56. Verfahren nach einem der vorstehenden Punkte, wobei der Formkörper in Schritt iv) eine eckige Unterseite, vorzugsweise eine eckige Unterseite mit abgerundeten Ecken aufweist und der Formkörper mit der eckigen, vorzugsweise eckigen Unterseite mit abgerundeten Ecken auf die Oberfläche des Pulvers aufgebracht wird.
57. Verfahren nach einem der vorstehenden Punkte, wobei der Formkörper in Schritt iv) eine dreieckige, viereckige oder sechseckige Unterseite aufweist und der Formkörper mit der dreieckigen, viereckigen oder sechseckigen Unterseite auf die Oberfläche des Pulvers aufgebracht wird.
58. Verfahren nach einem der vorstehenden Punkte, wobei der Formkörper in Schritt iv) eine zur Unterseite planparallele Oberseite aufweist und die Unterseite auf die Oberfläche des Pulvers aufgebracht wird.
59. Verfahren nach einem der vorstehenden Punkte, wobei der Formkörper in Schritt iv) eine Unterseite und eine Oberseite aufweist, welche durch eine zylindrische Mantelfläche miteinander verbunden sind und der Formkörper mit der Unterseite auf die Oberfläche des Pulvers aufgebracht wird.
60. Verfahren nach einem der vorstehenden Punkte, wobei der Formkörper in Schritt iv) eine Unterseite aufweist, deren Umriss der Öffnungsfläche der Kavität nachgebildet ist und der Formkörper mit der Unterseite auf die Oberfläche des Pulvers aufgebracht wird.
61. Verfahren nach einem der vorstehenden Punkte, wobei der Formkörper in Schritt iv) eine Unterseite aufweist, deren Umriss aus dem Umriss der Öffnungsfläche der Aufnahmekammer durch eine Verkleinerung mit einem Faktor von 0,75 bis 0,98 erhalten wird, und der Formkörper mit der Unterseite auf die Oberfläche des Pulvers aufgebracht wird.
62. Verfahren nach einem der vorstehenden Punkte, wobei die Aufnahmekammer im Anschluss an Schritt iv) eine Füllgrad oberhalb 85 Vol.-%, vorzugsweise oberhalb 94 Vol.-% aufweist.
63. Verfahren nach einem der vorstehenden Punkte, wobei die wasserlösliche Aufnahmekammer in Schritt v) mit einem wasserlöslichen Film verschlossen wird.
64. Verfahren nach einem der vorstehenden Punkte, wobei die wasserlösliche Aufnahmekammer durch Tiefziehen eines ersten wasserlöslichen Films erhalten wird und in Schritt v) mit einem zweiten wasserlöslichen Film verschlossen wird und der zweite wasserlösliche Film eine geringere Dicke aufweist als der erste wasserlösliche Film.
65. Verfahren nach einem der vorstehenden Punkte, wobei der erste wasserlösliche Film eine Dicke von 60 bis 200 µm aufweist und der zweite wasserlösliche Film eine Dicke von 40 bis 120 µm aufweist.
66. Verfahren nach Punkt 65, wobei der zweite wasserlösliche Film eine Dicke von 80 µm oder weniger, bevorzugt von 70 µm oder weniger, insbesondere von 65 µm oder weniger, ganz besonders bevorzugt von 55 µm oder weniger aufweist.
67. Verfahren nach Punkt 65 bis 66, wobei das Verhältnis der Dicke des ersten wasserlöslichen Films zur Dicke des zweiten wasserlöslichen Films von 3:1 bis 1:1, bevorzugt von 2,5:1 bis 1,1:1, insbesondere von 2:1 bis 1,2:1 beträgt.
68. Verfahren nach einem der vorstehenden Punkte, wobei die verschlossene befüllte Aufnahmekammer nach Schritt v) in einem weiteren Schritt vi) für eine Zeitdauer von 0,5 bis 20 Sekunden auf Temperaturen oberhalb 120°C, vorzugsweise auf Temperaturen im Bereich von 140 bis 220°C erwärmt wird.

## Patentansprüche

1. Reinigungsmitteleinmalportion, umfassend
a) eine wasserlösliche Verpackung, umfassend
a1) mindestens eine wasserlösliche Aufnahmekammer
a2) ein diese wasserlösliche Aufnahmekammer verschließendes wasserlösliches Verschlusselement
b) eine phosphatfreie Reinigungsmittelzusammensetzung, umfassend
b1) mindestens eine Gelphase
b2) mindestens ein Pulver,
b3) mindestens einen, von Pulver und Gelphase verschiedenen, Formkörper,
wobei der Formkörper in der Kammer so angeordnet ist, dass er sich nicht in direktem Kontakt mit der mindestens einen Gelphase befindet.

2. Reinigungsmitteleinmalportion nach Anspruch 1, wobei der Formkörper in der Kammer so angeordnet ist, dass er sich in direktem Kontakt mit dem Verschlusselement befindet.

3. Reinigungsmitteleinmalportion nach einem der vorstehenden Ansprüche, **dadurch gekennzeichnet, dass** die mindestens eine Gelphase und/oder der Formkörper mit dem Pulver Kontakt haben.

4. Reinigungsmitteleinmalportion nach einem der vorstehenden Ansprüche, **dadurch gekennzeichnet, dass** der Formkörper eine Höhe von 2,5 bis 9 mm, bevorzugt 2,75 bis 6,0 mm, insbesondere 3,0 bis 5,5 mm aufweist.

5. Reinigungsmitteleinmalportion nach einem der vorstehenden Ansprüche, **dadurch gekennzeichnet, dass** das Gesamtgewicht des Formkörpers von 4 g bis 8 g, bevorzugt von 5 bis 7 g beträgt.

6. Reinigungsmitteleinmalportion nach einem der vorstehenden Ansprüche, **dadurch gekennzeichnet, dass** das Gewichtsverhältnis von Pulver zu Formkörper von 4:1 bis 1:1, bevorzugt von 3,75:1 bis 1,25:1, insbesondere von 3,5:1 bis 1,5:1, ganz besonders bevorzugt von 3,25:1 bis 1,75:1 beträgt.

7. Reinigungsmitteleinmalportion nach einem der vorstehenden Ansprüche, **dadurch gekennzeichnet, dass** das Gewichtsverhältnis des Formkörpers zur Gelphase(n) (Summe aller Gelphasen), von 8:1 bis 1:2, bevorzugt von 6:1 bis 1:1, insbesondere von 4,5:1 bis 1,5:1, ganz besonders bevorzugt von 4:1 bis 1,75:1 beträgt.

8. Reinigungsmitteleinmalportion nach einem der vorstehenden Ansprüche, **dadurch gekennzeichnet, dass** die mindestens eine Gelphase, wasserlösliches Polymer aus der Gruppe der (ggf. acetalisierten) Polyvinylalkohole sowie deren Copolymeren umfasst.

9. Verfahren zur Herstellung einer Reinigungsmittelportionseinheit in einer wasserlöslichen Verpackung nach einem der Ansprüche 1 bis 8, umfassend die aufeinander folgenden Schritte
i) Bereitstellen einer wasserlöslichen Aufnahmekammer;
ii) Einbringen mindestens einer Gelphase in die Aufnahmekammer;
iii) Einfüllen mindestens eines Pulvers in die Aufnahmekammer;
iv) Aufbringen eines Formkörpers auf das Pulver;
v) Verschließen der befüllten Aufnahmekammer mit einem wasserlöslichen Verschlusselement.

10. Verfahren nach Anspruch 9, wobei das Pulver in Schritt iii) derart in die Aufnahmekammer eingefüllt wird, dass die der Öffnung der Aufnahmekammer zugewandte Oberfläche der Gelphase(n) vollständig mit Pulver bedeckt ist.
